# EUROPÄISCHE PATENTANMELDUNG

(11) **EP 4 620 373 A1**
(43) Veröffentlichungstag der Anmeldung: **24.09.2025**
(21) Anmeldenummer: 25158571.7
(22) Anmeldetag: 18.02.2025
(51) Int. Cl.: A47L 15/42

(54) **GESCHIRRSPÜLMASCHINE MIT EINER WÄRMEPUMPE**

(30) Priorität: 21.03.2024 DE 102024202682
(71) Anmelder: BSH Hausgeräte GmbH, 81739 München (DE)
(72) Erfinder: Steinle, Klaus, 86672 Thierhaupten (DE); Wecker, Markus, 89355 Gundremmingen (DE); Wecker, Thomas, 89344 Aislingen (DE); Lutz, Stephan, 86637 Zusamaltheim (DE)

(57) **Zusammenfassung**

Eine Geschirrspülmaschine (1) mit zumindest einer Wärmepumpe (14), ist so ausgebildet, dass eine Luftfördereinrichtung (26) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), zumindest eines durchzuführenden Geschirrspülprogramms (GP), für eine Nachlaufzeitdauer (NZ1, NZ2) betreibbar ist.

## Beschreibung

Die vorliegende Erfindung betrifft eine Geschirrspülmaschine, insbesondere Haushaltsgeschirrspülmaschine, mit zumindest einer Wärmepumpe, die zumindest einen Kompressor, einen Verflüssiger, ein Expansionsorgan und einen Verdampfer umfasst, die untereinander über Leitungsbereiche zur Weiterleitung eines im Betrieb den Aggregatzustand wechselnden Arbeitsmediums verbunden sind, wobei der Wärmepumpe zumindest eine Zuleitung und eine Ableitung von in der Geschirrspülmaschine zirkulierbarer Spülflüssigkeit zugeordnet sind, und wobei zumindest eine Luftfördereinrichtung vorgesehen ist.

Es ist bekannt, zur energetischen Optimierung einer Geschirrspülmaschine, insbesondere Haushaltsgeschirrspülmaschine, diese mit einer Wärmepumpe zu versehen, um mit deren Hilfe die Beheizung von in der Geschirrspülmaschine umlaufendem Spülwasser zumindest unterstützen zu können, d.h. teilweise oder bei entsprechender Ausbildung der Geschirrspülmaschine, insbesondere deren Wärmepumpe, auch vollständig über die Wärmepumpe erreichen zu können. Eine solche Wärmepumpe ist vorzugsweise eine Luft-Wärme-Pumpe. Deren Verdampfer weist üblicherweise ein in Mäandern oder Windungen verlaufende, vom Arbeitsmedium durchströmte Verdampferleitung und mit dieser thermisch leitend verbundene flächige Wärmetauschelemente, insbesondere sogenannte Lamellen, auf, zwischen denen von Luft durchströmbare Kanäle bzw. Durchgänge vorhanden sind. Die derart gebildete Struktur bzw. das Gebilde des Verdampfers wird bei der Durchführung eines Geschirrspülprogramms in zumindest einer mittels der Wärmepumpe durchgeführten Aufheizphase von Spülwasser mittels einer Luftfördereinrichtung mit Umgebungsluft durchströmt. Dabei entzieht der Verdampfer der Umgebungsluft Wärme und überträgt diese auf das durch seine Verdampferleitung strömende Arbeitsmedium der Wärmepumpe. Mittels des Verflüssigers der Wärmepumpe wird dann Wärme vom Arbeitsmedium auf das jeweilig zu erwärmende Spülwasser übertragen. Die dem Verdampfer während des Betriebs der Wärmepumpe mittels der Luftfördereinrichtung (häufig unterhalb von Küchenmöbeln) zwangszugeförderte Umgebungsluft kühlt beim Durchströmen der Struktur bzw. des Gebildes des Verdampfers aufgrund des Entzugs von Wärmeenergie ab, so dass kalte Luft, insbesondere zumindest zeitweise mit einer Temperatur von weniger als 6° C (Celsius), vorzugsweise mit einer Temperatur um den Gefrierpunkt (0° C) oder gar mit Minusgraden, die Wärmepumpe und schließlich die Geschirrspülmaschine in die Umgebung am Aufstellort der Geschirrspülmaschine verlässt. Beströmt nun diese kalte Luft eine der Geschirrspülmaschine nahe gelegene Gebäudewand und/oder ein benachbartes Küchenmöbelteil, besteht die Gefahr, dass die Gebäudewand und/oder das Küchenmöbelteil zumindest oberseitig zu kalt gegenüber der Taupunkttemperatur der Raumluft am Aufstellort der Geschirrspülmaschine wird/werden. Insbesondere wenn die Geschirrspülmaschine mit ihrer Rückseite nur mit einem geringen Luftspalt vor einer Gebäudewand aufgestellt ist und die Luftfördereinrichtung bei laufendem Kompressor der Wärmepumpe Umgebungsluft durch die Struktur des Verdampfers in Tiefenrichtung und dann die derart abgekühlte Luft über eine Öffnung bzw. einen Auslass in der Rückseite des Gerätekorpus der Geschirrspülmaschine auf die hinter ihr vorhandene Gebäudewand bläst, besteht die Gefahr, dass diese an ihrer Oberfläche zu kalt wird. Eine weitere kritische Situation kann sein, wenn die Geschirrspülmaschine in einer Gebäudeecke z.B. eines Küchenraums aufgestellt ist. Dann kann nicht nur die rückseitige Gebäudewand, sondern ggf. auch die Gebäudewandecke sowie ggf. auch die seitliche Gebäudewand neben der Geschirrspülmaschine durch die während des Wärmepumpenbetriebs rückseitig aus dem Gerätekorpus ausgeblasene Luft zu kalt werden. Eine seitlich von der Geschirrspülmaschine vorhandene Gebäudewand kann insbesondere dann an ihrer Oberfläche zu stark abkühlen, wenn die während des Wärmepumpenbetriebs durch den Verdampfer abgekühlte Luft nicht an der Rückseite der Geschirrspülmaschine, sondern über eine Öffnung in einer dieser seitlichen Gebäudewand benachbarten Seitenwand des Gerätekorpus der Geschirrspülmaschine ausgeblasen wird. Falls die Geschirrspülmaschine in eine Einbaunische einer Küchenzeile z.B. zwischen zwei Küchenunterschränken eingebaut ist, kann je nachdem, wo die Ausblasöffnung im Gerätekorpus vorgesehen ist - rückseitig oder seitlich - , die rückseitige Gebäudewand, und/oder das linksseitig und/oder rechtsseitig von der Geschirrspülmaschine vorhandene Küchenmöbelteil von der aus der Geschirrspülmaschine bei Betrieb der Wärmepumpe herausströmenden kalten Luft beströmt werden. An dem mit dieser abgekühlten Luft während des Wärmepumpenbetriebs beströmten Oberflächenbereich der Gebäudewand und/oder Küchenmöbelwand kann in der Folge, insbesondere nach dem Ende des Wärmepumpenbetriebs, Feuchtigkeit aus zum kalten Oberflächenbereich nachströmenden Raumluft auskondensieren, so dass dort die Gebäudewand und/oder Küchenmöbelwand feucht werden können/kann. Aufgrund der oft schlechten Belüftung im hinteren Bereich und/oder seitlichen Bereich der Geschirrspülmaschine ist daher dort auch die Gefahr für Schimmelbildung hoch.

Es ist bekannt, durch Luftleitelemente die hinter der Geschirrspülmaschine strömende Luft einer gewissen Lenkung zu unterziehen; das Problem der Wandabkühlung und schlechten Wandbelüftung ist dabei jedoch ungelöst.

Der Erfindung liegt die Aufgabe zugrunde, einen Weg aufzuzeigen, wie bei einer Geschirrspülmaschine, insbesondere Haushaltsgeschirrspülmaschine, mit Wärmepumpe deren Betrieb in der Praxis unter einer Vielzahl von Aufstell- und/oder Einbausituationen stets einwandfrei ohne Beeinträchtigungen oder gar Schäden an umliegenden Gebäudewänden und/oder Möbelteilen und/oder an der Geschirrspülmaschine möglich ist.

Insbesondere liegt der Erfindung I das Problem zugrunde, bei einer Wärmepumpe für eine Geschirrspülmaschine, insbesondere Haushaltsgeschirrspülmaschine, den Schutz einer hinter und/oder neben der Geschirrspülmaschine stehenden Gebäudewand und/oder Küchenmöbelwand zu verbessern.

Die Erfindung löst diese Aufgabe bzw. dieses Problem durch eine Geschirrspülmaschine; insbesondere Haushaltsgeschirrspülmaschine, mit den Merkmalen des Anspruchs 1 sowie durch ein Verfahren mit den Merkmalen des Anspruchs 15. Hinsichtlich vorteilhafter Ausgestaltungen und Weiterbildungen der Erfindung wird auf die weiteren Ansprüche 2 bis 14 und 16 bis 21 verwiesen.

Erfindungsgemäß ist die Luftfördereinrichtung nach dem Ende der letzten mittels der Wärmepumpe durchgeführten Aufheizphase für Spülflüssigkeit, insbesondere nach dem Ende der Klarspülphase, zumindest eines durchzuführenden Geschirrspülprogramms, während dem in ein oder mehreren Teilspülphasen die zum Reinigen von Geschirr, Gläsern oder ähnlichem Spülgut jeweilig verwendete Spülflüssigkeit in zumindest einer Aufheizphase mittels der Wärmepumpe erwärmbar ist, für eine Nachlaufzeitdauer einer Nachlaufphase betreibbar. Während der Nachlaufphase der Luftfördereinrichtung ist der Kompressor der Wärmepumpe ausgeschaltet. Die letzte mittels der Wärmepumpe durchgeführte Aufheizphase ist dabei diejenige Phase, bei welcher die Wärmepumpe das letzte Mal zumindest teilweise an der Erwärmung von Spülflüssigkeit während der Spülphase des jeweilig durchzuführenden Geschirrspülprogramms beteiligt ist. Die Spülphase des jeweiligen Geschirrspülprogramms kann ein oder mehrere zeitlich aufeinanderfolgende Teilspülphasen - wie z.B. Vorspülen, Reinigen, Zwischenspülen, und Klarspülen - umfassen.

Durch die Nachlaufphase, d.h. durch die dem Ende des Wärmepumpenbetriebs zeitlich nachgeordnete Belüftungsphase, der Luftfördereinrichtung ist in vorteilhafter Weise für eine aktive Belüftung einer der Geschirrspülmaschine, insbesondere Haushaltsgeschirrspülmaschine, an deren Aufstellort oder Einbauort nahe gelegenen bzw. benachbarten Gebäudewand und/oder Küchenmöbelwand gesorgt, die zuvor während des Wärmepumpenbetriebs mit durch den Verdampfer aufgrund von Wärmeentzug abgekühlter, kalter Luft beaufschlagt wurden/wurde. Dadurch lässt sich die Gefahr verringern, dass an ein oder mehreren während des Wärmepumpenbetriebs kalt gewordenen Stellen bzw. Bereichen der Gebäudewand und/oder Küchenmöbelwand Feuchtigkeit bzw. Kondenswasser aus der Umgebungsluft anfällt, was insbesondere der Fall sein kann, wenn die Raumluft im Spaltfreiraum zwischen dem Gerätekorpus und der diesem jeweilig nahe gelegenen Gebäudewand und/oder Küchenmöbelwand steht, d.h. unbewegt ist, und dadurch an diesen ein oder mehreren kalten Wandstellen bzw. Wandbereichen unter ihre Taupunkttemperatur abgekühlt wird. Falls sich an den Oberflächen dieser ein oder mehreren kalten Stellen bzw. kalten Bereiche der Gebäudewand und/oder Küchenmöbelwand bereits Feuchtigkeit bzw. Kondenswasser aus nachströmender, wärmerer Raumluft niedergeschlagen hat, kann von dort diese Feuchtigkeit durch die von der Luftfördereinrichtung während ihres Nachlaufbetriebs bzw. Belüftungsbetriebs erzeugten Luftströmung weggeblasen werden und/oder (aufgrund des höheren Stoffübertragungskoeffizienten vorbeiströmender Luft) mitgenommen werden, und somit die Oberfläche der Gebäudewand und/oder Küchenwand abgetrocknet, d.h. trockener gemacht werden.

Insbesondere ist die zu belüftende Gebäudewand und/oder Küchenmöbelwand hinter und/oder neben bzw. seitlich der Geschirrspülmaschine, insbesondere Haushaltsgeschirrspülmaschine, angeordnet. Sie ist insbesondere einem Teil des Gerätekorpus der Geschirrspülmaschine, insbesondere Haushaltsgeschirrspülmaschine, zugeordnet, aus dem kalte Luft während der ein oder mehreren mittels der Wärmepumpe durchgeführten Aufheizphasen für Spülflüssigkeit, d.h. während des Wärmepumpenbetriebs (Kompressor eingeschaltet) in der Spülphase des jeweilig durchzuführenden Geschirrspülprogramms, ausströmt, insbesondere ausgeblasen wird, wodurch sie mit durch den Verdampfer aktiv abgekühlter Umgebungsluft direkt oder indirekt beströmt wird. Davon betroffen ist insbesondere vor allem diejenige Gebäudewand und/oder Küchenmöbelwand, die demjenigen Teil des Gerätekorpus zugeordnet ist, vorzugsweise gegenüberliegt, aus welchem während des Wärmepumpenbetriebs über zumindest einen Auslass durch den Verdampfer aktiv abgekühlte Luft mittels einer Luftfördereinrichtung der Geschirrspülmaschine, insbesondere Haushaltsgeschirrspülmaschine, vorzugsweise mittels einer dem Verdampfer für den Wärmepumpenbetrieb zugeordneten Luftfördereinrichtung, ausgeblasen wird.

Die ein oder mehreren Oberflächenstellen bzw. - Bereiche der Gebäudewand und/oder Küchenmöbelwand, die während des vorausgehenden Wärmepumpenbetriebs mit durch den Verdampfer aufgrund von Wärmeentzug abgekühlter, kalter Luft beaufschlagt und dadurch kalt wurden, können nach dem Ausschalten der Wärmepumpe durch den Nachlaufbetrieb bzw. Belüftungsbetrieb zumindest einer Luftfördereinrichtung der Geschirrspülmaschine, insbesondere Haushaltsgeschirrspülmaschine, vorzugsweise mit (gegenüber der Kaltluft beim Wärmepumpenbetrieb) jetzt wärmerer Luft beströmt und so wieder wärmer gemacht werden.

Diese warme Luft, die eine höhere Temperatur als die während des Wärmepumpenbetriebs zur Aufheizung von Spülflüssigkeit von der Geschirrspülmaschine, insbesondere Haushaltsgeschirrspülmaschine, an die Gebäudewand und/oder Küchenmöbelwand abgegebene Kaltluft aufweist, kann nach einer vorteilhaften Weiterbildung der Erfindung insbesondere Umgebungsluft sein, die von zumindest einer Luftfördereinrichtung der Geschirrspülmaschine, insbesondere Haushaltsgeschirrspülmaschine, während der Nachlaufphase aus der Umgebung um die Geschirrspülmaschine, insbesondere Haushaltsgeschirrspülmaschine, herum in den zwischen dem Gerätekorpus der Geschirrspülmaschine, insbesondere Haushaltsgeschirrspülmaschine, und der diesem nahe gelegenen Gebäudewand und/oder Küchenmöbelwand vorhandenen Spaltfreiraum förderbar oder gefördert ist, und/oder die während der Nachlaufphase durch die mittels der Luftfördereinrichtung im Spaltfreiraum bewirkte Luftbewegung nachströmt. Es kann sich im Spaltfreiraum insbesondere aus der vor den ein oder mehreren kalten Oberflächenstellen bzw. - bereichen der Gebäudewand und/oder Küchenmöbelwand befindlichen Kaltluft und der dorthin geförderten und/oder nachströmenden, wärmeren Umgebungsluft gegenüber der Kaltluft wärmere, bewegte Mischluft bilden, die die ein oder mehreren kalten Oberflächenstellen bzw. -bereiche erwärmt und von dort etwaig vorhandene Feuchtigkeit aufnimmt und wegtransportiert.

Besonders günstig kann es nach einer vorteilhaften Weiterbildung der Erfindung sein, wenn die jeweilig zu belüftende Gebäudewand und/oder Küchenmöbelwand mittels zumindest einer Luftfördereinrichtung der Geschirrspülmaschine, insbesondere Haushaltsgeschirrspülmaschine, in der Nachlaufphase bzw. Belüftungsphase mit Umgebungsluft beströmbar oder beströmt ist, die einen Laufweg bzw. Luftförderweg, insbesondere Ansaugweg, im Gerätekorpus der Geschirrspülmaschine, insbesondere Haushaltsgeschirrspülmaschine, und/oder einen mit dem Gerätekorpus anderweitig in thermischen Kontakt stehenden Laufweg bzw. Luftförderweg, insbesondere Ansaugweg, durchströmt, entlang welchem sie durch ein oder mehrere dort vorhandene, Abwärme bzw. Verlustwärme abgebende Komponenten der Geschirrspülmaschine, insbesondere Haushaltsgeschirrspülmaschine, vorwärmbar oder vorgewärmt ist, insbesondere auf eine Temperatur höher als die Temperatur der außerhalb der Geschirrspülmaschine, insbesondere Haushaltsgeschirrspülmaschine, um deren Aufstellungs- bzw. Einbauort herum vorhandenen Umgebungsluft. Diese ein oder mehreren Abwärme abgebenden Komponenten sind dabei vorzugsweise solche Bauteile, die in den ein oder mehreren der Nachlaufphase bzw. Belüftungsphase zeitlich vorausgegangenen Teilspülphasen der Spülphase des jeweilig durchzuführenden Geschirrspülprogramms direkt und/oder indirekt mit Hilfe oder zumindest durch Unterstützung der Wärmepumpe aufgeheizt wurden und nach dem Ausschalten der Wärmepumpe zum Ende der letzten, Spülflüssigkeit aufheizenden Aufheizphase eines jeweilig durchzuführenden Geschirrspülprogramms jetzt in der Nachlaufphase Wärme bzw. thermische Energie - insbesondere aufgrund ihrer thermischen Massen Wärme passiv - an die vorbeiströmende Luft abgeben. Dies können z.B. der Spülbehälterboden, der Pumpensumpf, die Umwälzpumpe, ... , eine ergänzend zum Aufheizen von Spülflüssigkeit mittels Wärmepumpe etwaig zusätzlich vorgesehene elektrische Flüssigkeitsheizung, die dann in der Nachlaufphase ebenfalls ausgeschaltet ist, der Verflüssiger der in der Nachlaufphase ausgeschalteten Wärmepumpe, der Kompressor der in der Nachlaufphase ausgeschalteten Wärmepumpe, usw.... sein. Auch kann in der Nachlaufphase noch Wärme von ein oder mehreren Komponenten an die vorbeiströmende Luft transferiert werden, welche auch im Nachlaufbetrieb noch eingeschaltet sind und thermische Energie, insbesondere Abwärme, abgeben, wie z.B. die Steuer-/Kontrolleinrichtung der Geschirrspülmaschine für die Durchführung des jeweiligen Geschirrspülprogramms.

Insbesondere kann es vorteilhaft sein, wenn die zumindest eine Luftfördereinrichtung während der Nachlaufphase Luft aus einem Hohlraum bzw. Vorerwärmungsraum, insbesondere Ansaugraum, im Gerätekorpus zur Belüftung der Gebäudewand und/oder Küchenmöbelwand entnimmt, insbesondere ansaugt, in welchem die Luft nach dem Ende der letzten mittels der Wärmepumpe durchgeführten Aufheizphase für Spülflüssigkeit einige Zeit bis zum Start der Nachlaufphase verweilte und dadurch durch ein oder mehrere Abwärme abgebende Komponenten verbessert vorerwärmt wurde. Dabei ist dieser Hohlraum, insbesondere Ansaugraum, zweckmäßigerweise ein Teilabschnitt des Laufwegs bzw. Förderwegs, insbesondere Ansaugwegs, so dass die Luftfördereinrichtung nach dem Start der Nachlaufphase während dieser Umgebungsluft von außerhalb der Geschirrspülmaschine, insbesondere Haushaltsgeschirrspülmaschine, in diesen Hohlraum, insbesondere Ansaugraum, des Gerätekorpus nachfördert, wo sie durch ein oder mehrere Abwärme abgebende Komponenten vorerwärmt wird. Der Vorerwärmungsraum kann sich vorzugsweise im Basisträger bzw. Sockel unterhalb des Spülbehälters der Geschirrspülmaschine, insbesondere Haushaltsgeschirrspülmaschine, befinden und/oder der Luftförderweg kann vorzugsweise durch das Innere des Basisträgers der Geschirrspülmaschine, insbesondere Haushaltsgeschirrspülmaschine, hindurchführen.

Energetisch vorteilhaft kann es also insbesondere sein, wenn zumindest eine Luftfördereinrichtung der Geschirrspülmaschine während der Nachlaufphase Luft zweckmäßigerweise aus dem Inneren des Basisträgers und/oder entlang einem Luftförderweg durch den Innenraum des Basisträgers bzw. Gerätesockels der Geschirrspülmaschine fördert, insbesondere ansaugt. Denn dabei kann von ein oder mehreren, im Basisträger vorhandenen Komponenten wie z.B. dem Pumpensumpf, der Umwälzpumpe, der etwaig auch vorhandenen elektrischen Spülflüssigkeitsheizung, der Steuer-/Kontrolleinrichtung zur Durchführung von ein oder mehreren Geschirrspülprogrammen, dem Kompressor der Wärmepumpe, dem Verflüssiger der Wärmepumpe, usw.... und/oder von ein oder mehreren an den Basisträger angrenzenden Komponenten wie z.B. der Bodenwand des Spülbehälters, welche während der ein oder mehreren, der Nachlaufphase zeitlich vorausgehenden Spülflüssigkeits- Aufheizphasen mittels Betrieb der Wärmepumpe und/oder einer etwaig vorhandenen Flüssigkeitsheizung aufgeheizt und/oder warm wurden/wurde, und/oder jetzt während der Nachlaufphase in Betrieb sind, Abwärme auf die von der Luftfördereinrichtung geförderten, insbesondere angesaugten, Luft übertragen bzw. transferiert werden, bevor diese den Gerätekorpus der Geschirrspülmaschine verlässt, insbesondere bevor diese von der Luftfördereinrichtung aus dem Gerätekorpus herausgeblasen wird.

Vorteilhaft kann es gemäß einer vorteilhaften Weiterbildung der Erfindung insbesondere sein, wenn mittels der zumindest einen während der Nachlaufphase betriebenen Luftfördereinrichtung in der Nachlaufphase, während der der Kompressor der Wärmepumpe ausgeschaltet ist, Luft durch die Struktur des Verdampfers gefördert, insbesondere geblasen, wird und der Verdampfer weitgehend abgetrocknet wird. Dadurch sinkt die Gefahr einer Korrosion des Verdampfers. Ohne den Nachlauf der Luftfördereinrichtung nach dem Ende der letzten mittels der Wärmepumpe durchgeführten Aufheizphase für Spülflüssigkeit, insbesondere der Klarspülphase, könnte hingegen der Verdampfer mit Kondensat bzw. Kondenswasser und/oder Reif und/oder Eis zu lange beaufschlagt bleiben, was etwaig zu Korrosionsschäden am Verdampfer führen könnte.

In günstiger Weise ist die für die Nachlaufphase vorgesehene Luftfördereinrichtung dem zumindest einen Verdampfer der Wärmepumpe zugeordnet. Insbesondere ist die für die Nachlaufphase bzw. Belüftungsphase vorgesehene Luftfördereinrichtung durch die dem Verdampfer für den Wärmepumpenbetrieb zugeordnete Luftfördereinrichtung gebildet. Die von der Luftfördereinrichtung bei der Wärmepumpenbetriebsphase sowie bei der Nachlaufphase jeweilig geförderte Luft ist vorzugsweise Umgebungsluft, d.h. Luft aus dem Raum um die Geschirrspülmaschine herum.

Sofern die Luftfördereinrichtung dem zumindest einen Verdampfer zuordenbar oder zugeordnet ist und dafür geeignet ist, Luft des die Geschirrspülmaschine umgebenden Raums bzw. Umgebungsluft durch die Struktur des Verdampfers hindurch und dann danach aus der Geschirrspülmaschine heraus zu fördern, insbesondere über zumindest einen im Gerätekorpus - vorzugsweise hinten an dessen Rückseite - vorgesehenen Luftauslass aus der Geschirrspülmaschine heraus zu fördern, muss für die Erfindung keine zusätzliche Luftfördereinrichtung installiert werden, sondern es kann diejenige Luftfördereinrichtung genutzt werden, die für den Betrieb der Wärmepumpe ohnehin erforderlich ist.

Gemäß einer vorteilhaften Weiterbildung der Erfindung ist die für die Nachlaufphase vorgesehene Luftfördereinrichtung in ihre Luftförderrichtung betrachtet fluidisch und insbesondere auch räumlich vorzugsweise vor dem Verdampfer angeordnet.

Vorzugsweise saugt eine solche, vor dem Verdampfer angeordnete, und während der Nachlaufphase bzw. Belüftungsphase betriebene Luftfördereinrichtung während der Nachlaufzeitdauer der Nachlaufphase aus einem Bereich - insbesondere des Basisträgers, oberhalb dem der Spülbehälter der Geschirrspülmaschine angeordnet ist, - (in ihre Luftförderrichtung betrachtet) vor dem, insbesondere im Basisträger untergebrachten, Verdampfer Luft an, die dort beim Passieren bzw. Durchströmen ihres Ansaugwegs auf eine Temperatur höher als die Umgebungstemperatur, d.h. höher als die Temperatur der Raumluft außerhalb der Haushaltsgeschirrspülmaschine, durch Abwärme bzw. Verlustwärme erwärmt wird, die von ein oder mehreren Komponenten der Geschirrspülmaschine wie z.B. Pumpensumpf, Spülbehälterboden, Verflüssiger, Kompressor, Steuer-/Kontrolleinrichtung, usw.... abgegeben wird, nachdem der Kompressor der Wärmepumpe am Ende der letzten, mittels zumindest teilweiser Unterstützung durch die Wärmepumpe durchgeführten Aufheizphase für Spülflüssigkeit, insbesondere am Ende der Klarspülphase, des jeweilig durchzuführenden Geschirrspülprogramms ausgeschaltet worden ist. Denn zuvor ist in bei einem Teil dieser Komponenten, insbesondere in deren thermischen Massen, thermische Energie aus den ein oder mehreren, zuvor durchgeführten Aufheizphasen für Spülflüssigkeit gespeichert worden. Ein anderer Teil dieser Komponenten wie z.B. die elektrische Energie verbrauchende Steuer- /Kontrolleinrichtung, die zur Ablaufsteuerung von ein oder mehreren Geschirrspülprogrammen vorgesehen ist, kann ggf. auch in der Nachlaufphase in Betrieb sein und Abwärme an die vorbeiströmende Luft abgeben. Die derart auf ihrem Strömungsweg vor dem Verdampfer durch Abwärme der ein oder mehreren Komponenten passiv vorerwärmte Luft wird mittels der vorzugsweise vor dem Verdampfer angeordneten Luftfördereinrichtung durch die Struktur des Verdampfers geblasen und trocknet dabei diesen verbessert ab, wodurch die Gefahr einer Korrosion des Verdampfers sinkt. Da der Kompressor bereits vor der Nachlaufphase ausgeschaltet worden ist und bleibt, und dadurch der Verdampfer während der Nachlaufphase nicht mehr weiter aktiv und daher weniger oder kaum die seine Struktur durchströmende, durch Abwärme vorerwärmte Luft abkühlt, kann diese nach Verlassen der Geschirrspülmaschine in vorteilhafter Weise noch so warm sein, dass sie die von ihr beströmte Gebäudewand und/oder die Küchenmöbelwand auf eine Temperatur vorzugsweise höher als die Taupunkttemperatur der außerhalb der Geschirrspülmaschine an deren Aufstellort oder Einbauort vorhandenen Umgebungsluft erwärmen kann. Zumindest kann die aus der Geschirrspülmaschine mittels der Luftfördereinrichtung während der Nachlaufphase ausgeblasene Luft die Oberfläche einer Gebäudewand und/oder einer Küchenmöbelwand, die zuvor in der jeweiligen Spülflüssigkeits-Aufheizphase bei laufendem Betrieb der Wärmepumpe (Kompressor ist in Betrieb) durch die durch den dann aktiv betriebenen Verdampfer stark abgekühlte Luft sehr kalt wurde, insbesondere unter die Taupunkttemperatur der Umgebungsluft abgekühlt wurde, jetzt während der Zeitdauer der Nachlaufphase wieder auf eine für Kondensation bzw. Kondenswasserbildung oder gar damit einhergehende Schimmelbildung unkritische Temperatur erhöht wird, die vorzugsweise über der Taupunkttemperatur der außerhalb der Geschirrspülmaschine vorhandenen Umgebungsluft liegt. Etwaige Feuchtigkeit auf der Oberfläche der Gebäudewand und/oder der Küchenmöbelwand lässt sich somit während der Nachlaufphase der Luftfördereinrichtung durch den erzeugten Luftzug der gegenüber der Taupunkttemperatur der Umgebungsluft wärmeren, durch Abwärme vorerwärmten Ausblasluft verbessert beseitigen.

Insbesondere ist die Luftfördereinrichtung in ihre Luftförderrichtung betrachtet dem Kompressor nachgeordnet. Dadurch kann die Abwärme des Kompressors in energetisch günstiger Weise auf die von der Luftfördereinrichtung jeweilig angesaugte Luft transferiert werden, wenn die jeweilige Wärmepumpenbetriebsphase sowie schließlich nach dem Ende der letzten mittels Wärmepumpe durchgeführten Spülflüssigkeits- Aufheizphase, insbesondere nach dem Ende der Klarspülphase, die jeweilige Nachlaufphase durchgeführt wird.

Besonders günstig zum aktiven Belüften und Abtrocknen einer Gebäudewand und/oder Küchenmöbelwand, die vor und/oder neben der die Haushaltsgeschirrspülmaschine angeordnet ist, ist es also zusammenfassend betrachtet, wenn insbesondere diejenige Luftfördereinrichtung, die dem Verdampfer zum Wärmeentzug während der jeweiligen Spülflüssigkeits- Aufheizphase zugeordnet ist, für die Nachlaufphase herangezogen wird. Denn dann ist keine weitere Luftfördereinrichtung erforderlich. Wenn der Ansaugweg für die von dieser Luftfördereinrichtung während der Belüftungsphase angesaugten Umgebungsluft an ein oder mehreren Komponenten der Haushaltsgeschirrspülmaschine vorbeiführt, die zuvor während der jeweiligen Aufheizphase für Spülflüssigkeit thermische Energie aufgenommen haben und/oder während der Nachlaufphase erzeugen, so kann jetzt während der Nachlaufphase die von der Luftfördereinrichtung angesaugte Luft Abwärme bzw. Verlustwärme von diesen ein oder mehreren Komponenten aufnehmen und von der Luftfördereinrichtung dann als vorerwärmte Luft, insbesondere aus dem Luftauslass des Verdampfers, in einen Spaltfreiraum hineingeblasen werden, der zwischen der Haushaltsgeschirrspülmaschine und der hinter ihr angeordneten Gebäudewand und/oder Küchenmöbelwand, und/oder zwischen der Haushaltsgeschirrspülmaschine und der neben ihr angeordneten Gebäudewand und/oder Küchenmöbelwand liegt, und/oder auf die zu belüftende Gebäudewand und/oder Küchenmöbelwand geblasen werden.

Ferner kann es zweckmäßig sein, wenn der Luftaustritt des Verdampfers mit zumindest einen Luftauslass im Gerätekorpus der Geschirrspülmaschine fluidisch verbunden ist. Insbesondere kann der Verdampfer derart angeordnet sein, dass sein luftaustrittseitiges Ende im Bereich einer oder in einer im Gerätekorpus vorgesehenen Auslassöffnung endet oder durch diese hindurch etwas nach außen ragt, so dass die den Verdampfer verlassende Luft in die Umgebung abgeführt werden kann.

Im Spaltraum zwischen dem den zumindest einen Luftauslass aufweisenden Abschnitt des Gerätekorpus und der diesem Bereich des Gerätekorpus jeweilig benachbarten Gebäudewand und/oder Küchenmöbelwand, insbesondere der nahe gelegenen Gebäudewand und/oder Küchenmöbelwand hinter und/oder neben der Geschirrspülmaschine, lässt sich somit Mischluft aus der von einer oder der dem Verdampfer zugeordneten Luftfördereinrichtung aus dem Luftauslass ausgeblasenen Luft, der im Spaltraum vorhandenen Umgebungsluft, sowie der von der Luftströmung der aus dem Luftauslass ausgeblasenen Luft nachgezogenen Raumluft erzeugen und bewegen, insbesondere umwälzen. Jedenfalls ist nach dem Ende der letzten, mittels der Wärmepumpe durchgeführten Aufheizphase von Spülflüssigkeit, insbesondere nach dem Ende der Klarspülphase, des jeweilig durchzuführenden Geschirrspülprogramms durch das Betreiben der Luftfördereinrichtung für die Nachlaufzeitdauer einer Nachlaufphase weitgehend vermieden, dass die Luft im Spaltraum zu lange stehen bleibt und die Oberfläche der jeweiligen Gebäudewand und/oder Küchenmöbelwand, die der Geschirrspülmaschine, insbesondere dem Teil des Gerätekorpus der Geschirrspülmaschine mit dem Luftauslass, zugeordnet ist bzw. sind, zu lange zu kalt und ggf. damit einhergehend zu feucht bleibt. Mit dieser aktiven Belüftung durch die Nachlaufzeitphase der Luftfördereinrichtung geht ein gezielter Luftaustausch im Spaltraum zwischen dem den zumindest einen Luftauslass aufweisenden Abschnitt des Gerätekorpus und der diesem Bereich des Gerätekorpus jeweilig nahe gelegen Gebäudewand und/oder Küchenmöbelwand, insbesondere benachbarten Gebäudewand und/oder Küchenmöbelwand hinter und/oder neben der Geschirrspülmaschine, durch nachströmende, wärmere Luft aus dem Raum am Aufstellungsort oder Einbauort der Geschirrspülmaschine einher. Dabei nimmt die an der Gebäudewand und/oder Küchenmöbelwand vorbeiströmende Luft Feuchtigkeit von dort mit, so dass Feuchtstellen, die sich beim Betrieb der Wärmepumpe (laufender Kompressor) während der ein oder mehreren zeitlich vorausgegangenen Spülflüssigkeits- Aufheizphasen und/oder im Zeitraum danach auf der Oberfläche der Gebäudewand und/oder Küchenmöbelwand etwaig bildeten, abgetrocknet werden können.

Insbesondere kann die Luftfördereinrichtung die von ihr geförderte Umgebungsluft vorzugsweise in einen von der Vorderseite der Geschirrspülmaschine diametral abgewandten Bereich hinter der Geschirrspülmaschine fördern. Dort kann die Luft insbesondere über zumindest einen in der Rückwand des Gerätekorpus vorgesehenen Luftauslass ausströmen.

Insbesondere kann es günstig sein, wenn der Verdampfer der Wärmepumpe derart im Basisträger der Geschirrspülmaschine angeordnet ist, dass sein luftaustrittsseitiges Ende fluidisch mit zumindest einen Luftauslass in der Rückwand der Geschirrspülmaschine verbunden ist, oder dort in diesem Luftauslass endet, oder durch diesen hindurch nach außen aus dem Gerätekorpus etwas herausragt. Vorzugsweise kann sich der Verdampfer in Tiefenrichtung der Geschirrspülmaschine, insbesondere im Wesentlichen geradlinig, erstrecken, so dass die Luft seine Struktur von vorne nach hinten durchströmt (bezogen auf die Raumrichtungen der Geschirrspülmaschine in deren Gebrauchsstellung).

Zweckmäßig kann es insbesondere sein, wenn neben dem Verdampfer auch die übrigen Komponenten der Wärmepumpe wie z.B. der Kompressor, der Verflüssiger, die diese Komponenten der Wärmepumpe untereinander verbindenden, das Arbeitsmedium der Wärmepumpe führenden Leitungsbereiche bzw. - abschnitte, sowie die dem Verdampfer zugeordnete Luftfördereinrichtung im Innenraum des Basisträgers, oberhalb dem der Spülbehälter der Geschirrspülmaschine angeordnet ist, untergebracht sind. Der Verdampfer ist vorzugsweise derart im Basisträger untergebracht, dass während der jeweiligen Nachlaufphase die in Luftförderrichtung zweckmäßigerweise vor dem Verdampfer angeordnete Luftfördereinrichtung Luft aus dem Innenraum des Basisträgers sowie der dieser nachströmende Luft aus der Umgebung der Geschirrspülmaschine durch Abwärme vorerwärmt, die von dort im Basisträger und/oder an diesen angrenzenden Komponenten wie z.B. Spülbehälterboden, Pumpensumpf, Umwälzpumpe, Verflüssiger der Wärmepumpe, Kompressor der Wärmepumpe, Steuer-/Kontrolleinrichtung zum Betrieb der Geschirrspülmaschine, usw. abgegeben wird.

Zweckmäßig kann es insbesondere sein, wenn der für den Nachlaufbetrieb vorgesehenen Luftfördereinrichtung eine Kontrolleinheit zugeordnet ist, die deren Betrieb leitet, insbesondere den jeweiligen Einschaltzeitpunkt, die Laufzeitdauer, und/oder den jeweiligen Ausschaltzeitpunkt der jeweiligen Nachlaufphase der Luftfördereinrichtung bestimmt und/oder vorgibt. Diese Kontrolleinheit kann insbesondere Bestandteil einer Steuer-/Kontrolleinrichtung sein, die den Betrieb der Wärmepumpe beaufsichtigt. Sie und/oder letztere kann vorzugsweise eine Teilkomponente einer übergeordneten Steuer-/Kontrolleinrichtung sein, mittels der sich die ein oder mehreren Teilspülphasen wie z.B. Vorspülen, Reinigen, Zwischenspülen, Klarspülen und die abschließende Trocknungsphase des jeweiligen Geschirrspülprogramms automatisiert durchführen lassen. Dabei können die Steuer-/Kontrolleinrichtung, die der Wärmepumpe zugeordnete Kontrolleinheit, und/oder die der Luftfördereinrichtung zugeordnete Kontrolleinheit jeweils durch Hardware- und/oder Software- Komponenten realisiert sein.

Gemäß einer vorteilhaften Weiterbildung der Erfindung erfolgt die letzte mittels der Wärmepumpe durchgeführte Spülflüssigkeits- Aufheizphase während der Klarspülphase des jeweilig durchzuführenden Geschirrspülprogramms. Ihr Ende entspricht vorzugsweise zumindest etwa dem Ende der Klarspülphase der aus ein oder mehreren Teilspülphasen zusammengesetzten Spülphase des jeweilig durchzuführenden Geschirrspülprogramms.

Günstig kann es insbesondere sein, wenn die Luftfördereinrichtung nach dem Ende der letzten mittels der Wärmepumpe durchgeführten Aufheizphase für Spülflüssigkeit, insbesondere nach dem Ende der Klarspülphase, des jeweilig durchzuführenden Geschirrspülprogramms, d.h. nach dem Ausschalten des Kompressors der Wärmepumpe am Ende der Aufheizphase, für eine Nachlaufzeitdauer, insbesondere während der Trocknungsphase des jeweilig durchzuführenden Geschirrspülprogramms, einfach weiterläuft, d.h. ihren Betrieb fortsetzt. Der Kompressor der Wärmepumpe bleibt dabei während der Nachlaufzeitdauer ausgeschaltet. Die Luftfördereinrichtung ist insbesondere ab Beginn der letzten mittels der Wärmepumpe durchgeführten Spülflüssigkeits-Aufheizphase, nach deren Ende der Kompressor ausgeschaltet wird, - vorzugsweise durchgängig - bis zum Ende der Nachlaufphase in Betrieb. Eine solche - vorzugsweise unterbrechungsfreie - Fortsetzung des Betriebs der Luftfördereinrichtung für eine Nachlaufzeitdauer nach dem Ende der letzten mittels der Wärmepumpe durchgeführten Aufheizphase für Spülflüssigkeit, insbesondere nach dem Ende der Klarspülphase, des jeweilig durchzuführenden Geschirrspülprogramms, ist durch die der Luftfördereinrichtung zugeordnete Kontrolleinheit der Geschirrspülmaschine sehr einfach umsetzbar.

Ggf. kann die Förderleistung der Luftfördereinrichtung im Nachlaufbetrieb gegenüber der Förderleistung der Luftfördereinrichtung bei eingeschalteter Wärmepumpe abgesenkt sein, um so einen unnötig hohen Energiebedarf und/oder unnötige Geräusche zu vermeiden. Wenn die Luftfördereinrichtung einen Lüfter aufweist, kann es ggf. zweckmäßig sein, wenn die Drehzahl des Lüfters während der Nachlaufphase von der Drehzahl des Lüfters während der zeitlich vorausgehenden, mittels Wärmepumpenbetrieb zuletzt durchgeführten Spülflüssigkeits- Aufheizphase verschieden ist. Insbesondere kann die Drehzahl des Lüfters während der Nachlaufphase geringer als die Drehzahl des Lüfters während der zeitlich vorausgehenden, mittels der Wärmepumpe zuletzt durchgeführten Spülflüssigkeits- Aufheizphase sein.

Alternativ kann es gemäß einer vorteilhaften Weiterbildung der Erfindung besonders günstig sein, wenn die Luftfördereinrichtung nach dem Ende der letzten mittels der Wärmepumpe durchgeführten Aufheizphase für Spülflüssigkeit, insbesondere nach dem Ende der Klarspülphase, des jeweilig durchzuführenden Geschirrspülprogramms erst mit zeitlichem Abstand zu diesem Ende, insbesondere in der Trocknungsphase des Geschirrspülprogramms, automatisiert einschaltbar und für eine Nachlaufzeitdauer, insbesondere bis zum Ende der Trocknungsphase des Geschirrspülprogramms, betreibbar ist.

Die Luftfördereinrichtung wird also nach dem Ende der letzten mittels der Wärmepumpe durchgeführten Aufheizphase für Spülflüssigkeit, insbesondere nach dem Ende der Klarspülphase, des jeweilig durchzuführenden Geschirrspülprogramms ausgeschaltet und erst nach einer Totzeit bzw. Pausenzeit für die Zeitdauer einer Nachlaufphase, insbesondere in der programmabschließenden Trocknungsphase des jeweilig durchzuführenden Geschirrspülprogramms, wieder eingeschaltet.

Insbesondere kann die Totzeit derart bemessen sein, dass Wassertröpfchen, die nach dem Ende des zeitlich vorausgehenden Wärmepumpenbetriebs am Verdampfer hängen (z.B. durch aus der beim Wärmepumpenbetrieb aus der vorbeiströmenden Luft anfallendes Kondenswasser und/oder durch Abtauen einer beim Wärmepumpenbetrieb anfallenden Bereifung), genügend Zeit haben, in ausreichender Menge vom Verdampfer nach unten z.B. in eine Auffangschale abzutropfen. Dadurch wird weitgehend vermieden, dass nach Einschalten der Luftfördereinrichtung die von dieser durch die Struktur des Verdampfers zwangsgeförderte Luft ungewollt viel Feuchtigkeit vom Verdampfer mitnimmt und zur jeweiligen, der Geschirrspülmaschine benachbarten Gebäudewand und/oder Küchenmöbelwand transportiert, die von der aus dem Gerätekorpus der Geschirrspülmaschine ausströmenden Luft beströmt wird.

Dadurch, dass bei einer Geschirrspülmaschine mit zumindest einer Wärmepumpe eine Luftfördereinrichtung, insbesondere die zum Wärmepumpenbetrieb vorgesehene Luftfördereinrichtung, nach der letzten, mittels der Wärmepumpe durchgeführten Aufheizphase für Spülflüssigkeit eines durchzuführenden Geschirrspülprogramms, insbesondere nach dem Ende der Klarspülphase automatisiert zu einem Nachlaufbetrieb bzw. Belüftungsbetrieb einschaltbar ist, kann Feuchtigkeit von einem Bereich zwischen der Geschirrspülmaschine und einer Gebäudewand weggeblasen werden und/oder dieser Raum kann mit Luft, vorzugsweise mit (gegenüber dem Wärmepumpenbetrieb) wärmerer, Luft, durchströmt werden, die etwaig auf der Oberfläche der Gebäudewand vorhandene Feuchtigkeit aufnimmt und aus dem zwischen der Geschirrspülmaschine und der Gebäudewand vorhandenen Spaltfreiraum wegtransportiert.

Durch eine Wartezeit bis zum Einschalten der Luftfördereinrichtung kann zudem erreicht werden, dass in den Raum zwischen der Geschirrspülmaschine und einer dieser benachbarten Gebäudewand und/oder Küchenmöbelwand Wärmeenergie von der Geschirrspülmaschine abgegeben wird. Damit kann dort bei abgeschalteter Wärmepumpe vor Zuführung von Luft durch die Luftfördereinrichtung bereits die Temperatur bis über den Taupunkt von Wasser angehoben sein, so dass auch bei dann erfolgender Luftzuleitung die Gefahr von Kondensation und Schimmelbildung deutlich vermindert ist.

Weiterhin gibt die Luftfördereinrichtung, insbesondere deren Lüfter, während der Wartezeit bis zum Einschalten der Luftfördereinrichtung kein Geräusch ab, was günstig für die Geräuschabgabe der Haushaltsgeschirrspülmaschine bezogen auf die Gesamtlaufzeit des jeweilig durchzuführenden Geschirrspülprogramms ist. Dies gilt insbesondere dann, wenn der Nachlaufbetrieb während der Trocknungsphase und/oder während einer dieser zeitlich nachfolgenden Aufbewahrungsphase ("storage function") stattfindet und die Zeitdauer der Trocknungsphase und/oder die Zeitdauer der Aufbewahrungsphase zur Gesamtlaufzeit des Geschirrspülprogramms hinzugerechnet werden/wird.

Wenn die Luftfördereinrichtung, insbesondere die im Wärmepumpenbetrieb zum Durchströmen der Struktur des Verdampfers mit Umgebungsluft vorgesehene Luftfördereinrichtung, zumindest außerhalb der Spülphase des jeweilig durchzuführenden Geschirrspülprogramms, d.h. nach dem Ende der ein oder mehreren Teilspülphasen, insbesondere der Klarspülphase, des jeweilig durchzuführenden Geschirrspülprogramms, ohne Betrieb der Wärmepumpe einschaltbar und betreibbar ist, kann die Luftfördereinrichtung während der Nachlaufphase alleine laufen, ohne dass in dieser Zeit am Verdampfer Wasser kondensiert oder der Verdampfer auch nur kalt bzw. aktiv gekühlt wird. Die von der Luftfördereinrichtung während der Nachlaufphase geförderte Luft wird daher idealerweise auch dann, wenn sie den Verdampfer überläuft bzw. durch dessen Struktur hindurchströmt, dort nicht aktiv gekühlt oder mit Wasser befrachtet.

Insbesondere ist die Luftfördereinrichtung mit einem zeitlichen Abstand von zumindest 3 Minuten, insbesondere von 3 Minuten bis 5 Minuten, nach dem Ende der letzten mittels der Wärmepumpe durchgeführten Aufheizphase für Spülflüssigkeit, insbesondere nach dem Ende der Klarspülphase, des jeweilig durchzuführenden Geschirrspülprogramms einschaltbar, um somit bereits eine hinreichende Zeit zum Abtropfen von insbesondere am Verdampfer anhaftendem Kondenswasser bereitzustellen.

Ggf., d.h. unter manchen praktischen Gegebenheiten, kann es zweckmäßig sein, wenn die Luftfördereinrichtung mit einem zeitlichen Abstand von zumindest 20 Minuten nach dem Ende der letzten mittels der Wärmepumpe durchgeführten Aufheizphase für Spülflüssigkeit, insbesondere der Klarspülphase, einschaltbar ist. Dann kann insbesondere der Wärmepumpe selbst auch genug Zeit gegeben sein, um am Verdampfer zusätzlich zum Abtropfen von Kondenswasser auch ein hinreichendes Aufwärmen des Verdampfers zu ermöglichen, um bei Einschalten der Luftfördereinrichtung dann die angeblasene Gebäudewand und/oder die angeblasene Küchenmöbelwand weder mit Feuchtigkeit noch mit kalter Luft zu belasten.

Es kann auch Konstellationen geben, bei denen es zweckmäßig sein kann, wenn die Luftfördereinrichtung erst mit einem zeitlichen Abstand von zumindest 40 Minuten nach dem Ende der letzten mittels der Wärmepumpe durchgeführten Aufheizphase für Spülflüssigkeit, insbesondere der Klarspülphase, einschaltbar ist. Dann kann die Trocknung und Erwärmung von Gebäudewand und/oder Küchenmöbelwand, und/oder des Verdampfers der Wärmepumpe noch weiter bis zum Einschalten der Luftfördereinrichtung fortschreiten, so dass die o. g. Vorteile weiter ausgebaut werden können.

Sofern die Luftfördereinrichtung dem zumindest einen Verdampfer zugeordnet ist und dafür geeignet ist, Luft des die Geschirrspülmaschine umgebenden Raums durch die Struktur des Verdampfers hindurch und dann danach aus der Geschirrspülmaschine herauszufördern, insbesondere über zumindest einen im Gerätekorpus - vorzugsweise hinten an dessen Rückseite - vorgesehenen Luftauslass aus der Geschirrspülmaschine herauszufördern, muss für die Erfindung keine zusätzliche Luftfördereinrichtung installiert werden, sondern es kann diejenige Luftfördereinrichtung genutzt werden, die für den Betrieb der Wärmepumpe ohnehin erforderlich ist. Insbesondere kann dabei die Luftfördereinrichtung dem zumindest einen Verdampfer derart zugeordnet und derart ausgebildet sein, dass sie Umgebungsluft durch die Struktur des Verdampfers hindurch vorzugsweise in einen von der Vorderseite der Geschirrspülmaschine diametral abgewandten, hinteren Bereich hinter der Geschirrspülmaschine fördern kann.

Vorzugsweise ist die Luftfördereinrichtung in ihre Luftförderrichtung betrachtet vor dem Verdampfer angeordnet und diesem zur Beströmung und/oder Durchströmung mit Umgebungsluft zugeordnet. Mit ihrer Hilfe lässt sich somit sowohl im Wärmepumpenbetrieb (bei Betrieb des Kompressors) als auch während der Nachlaufphase jeweils Umgebungsluft ansaugen und durch die Struktur des Verdampfers blasen. Zudem kann mit ihrer Hilfe zugleich die den Verdampfer beströmende bzw. dessen Strukturgebilde durchströmende Luft nach Verlassen des Verdampfers aus der Geschirrspülmaschine in die Umgebung herausgefördert werden. Es genügt somit eine einzige Luftfördereinrichtung.

Ggf. kann die Luftfördereinrichtung für die Nachlaufphase bzw. Belüftungsphase auch durch zumindest eine schon vorhandene Luftfördereinrichtung gebildet sein, die für eine andere Funktion als die Luftfördereinrichtung, die dem Verdampfer zum Beströmen und/oder Durchströmen mit Umgebungsluft während der jeweiligen mittels Wärmepumpenbetrieb durchzuführenden Spülflüssigkeits- Aufheizphase zugeordnet ist, in und/oder an der Haushaltsgeschirrspülmaschine vorgesehen ist. Eine solche zweite, bereits vorhandene Luftfördereinrichtung ist vorzugsweise nicht vor dem Verdampfer, sondern an einer davon verschiedenen Stelle der Haushaltsgeschirrspülmaschine angeordnet. Sie sorgt für eine Belüftung des Spaltfreiraums während der Nachlaufphase bzw. Belüftungsphase alleine oder ggf. auch in Kombination mit der vor dem Verdampfer angeordneten Luftfördereinrichtung. Insbesondere lässt sich mit ihrer Hilfe während der Belüftungsphase Umgebungsluft, die durch ein oder mehrere Abwärme abgebende Komponenten der Haushaltsgeschirrspülmaschine vorerwärmt ist und/oder wird, in den Spaltfreiraum und/oder auf die ein oder mehreren kalten Zonen bzw. Bereiche der Gebäudewand fördern, insbesondere blasen.

Entsprechendes gilt, wenn nach einer weiteren Alternative zumindest eine Luftfördereinrichtung eigens bzw. extra für den Belüftungsbetrieb zusätzlich zu der für den Wärmepumpenbetrieb vor dem Verdampfer vorgesehenen Luftfördereinrichtung, insbesondere an einer anderen Stelle als diese, vorgesehen ist.

Wenn die Luftfördereinrichtung ein um eine in Betriebsstellung der Geschirrspülmaschine horizontale oder zumindest nahezu horizontale Achse rotierbares Förderrad umfasst, kann ein horizontaler Luftstrom erzeugt werden, der insbesondere im unteren Bereich der Geschirrspülmaschine wirksam ist, so dass von dort weit unten die von der Luftfördereinrichtung geförderte Luft gegen die der Geschirrspülmaschine benachbarte, vorzugsweise hintere, Gebäudewand geblasen werden kann und dort die, insbesondere gegenüber der beim Wärmepumpenbetrieb geförderten Kaltluft wärmere, Luft von unten nach oben aufsteigen kann.

Wenn die Luftfördereinrichtung geeignet ist, Luft gegen eine in Betriebsstellung hinter der Geschirrspülmaschine befindliche Gebäudewand für eine Belüftungsphase zu fördern, kann insbesondere dort die Schimmelgefahr entscheidend vermindert werden.

Sofern die eingeschaltete Betriebszeit bzw. Nachlaufzeitdauer der Luftfördereinrichtung im Nachlaufbetrieb bei zumindest 10 Minuten, insbesondere zwischen 20 Minuten und 60 Minuten liegt, können eine sehr gründliche Trocknung und ein hohes Maß an Luftaustausch im wandnahen Bereich, d.h. im Bereich einer der Geschirrspülmaschine benachbarten Gebäudewand und/oder Küchenmöbelwand, insbesondere im Bereich einer Gebäudewand und/oder Küchenmöbelwand hinter der Geschirrspülmaschine und/oder seitlich der Geschirrspülmaschine bewirkt werden.

Zur Optimierung kann die eingeschaltete Betriebszeit der Luftfördereinrichtung im Nachlaufbetrieb zweckmäßigerweise so liegen, dass die Nachlaufphase in der Trocknungsphase bis zu deren Ende dauert. Falls die Trocknungsphase eine Türöffnungsphase mit lediglich spaltweiser Türöffnung zur Trocknungsunterstützung umfasst, kann die Nachlaufphase zum Ende der Türöffnung enden.

Für eine hohe energetische Effizienz und Langlebigkeit der Baueinheit liegt die eingeschaltete Betriebszeit der Luftfördereinrichtung im Nachlaufbetrieb vorzugsweise bei maximal 90 Minuten ohne Unterbrechung.

Ggf. kann die Förderleistung der Luftfördereinrichtung im Nachlaufbetrieb gegenüber der Förderleistung der Luftfördereinrichtung bei eingeschalteter Wärmepumpe abgesenkt sein, um so einen unnötig hohen Energiebedarf und/oder unnötige Geräusche zu vermeiden.

Es gibt verschiedene Möglichkeiten, den zeitlichen Abstand bis zum Einschalten der Luftfördereinrichtung und/oder die Laufzeit bzw. Zeitdauer des Nachlaufbetriebs der Luftfördereinrichtung zu steuern oder zu regeln:
Zum einen kann die Zeit bis zum Einschalten der Luftfördereinrichtung und/oder die Laufzeit des Nachlaufbetriebs fest voreingestellt sein.

Alternativ kann eine Messung der Umgebungstemperatur im Raum (um die Geschirrspülmaschine herum) vorgenommen werden, zum Beispiel auch während der mittels des Wärmepumpenbetriebs durchgeführten Spülphase des jeweilig durchzuführenden Geschirrspülprogramms und/oder zu Beginn der mittels des Wärmepumpenbetriebs durchgeführten Spülphase und/oder bereits vor dieser. Je höher die Umgebungstemperatur bzw. Raumtemperatur, insbesondere schon vor und/oder zu Beginn der Wärmepumpenbetriebsphase(n) des jeweilig durchzuführenden Geschirrspülprogramms, ist, desto kürzer kann die Zeit bis zum Einschalten der Luftfördereinrichtung und/oder je kürzer kann die Nachlaufzeitdauer sein.

Zum dritten kann zum Beispiel zeitlich getaktet eine Temperatur am Verdampfer gemessen werden und diese Temperatur als Eingangsparameter für eine Kontrolle, insbesondere Regelung und/oder Steuerung, des Nachlaufbetriebs bezüglich Einschaltzeit und/oder Einschaltdauer Verwendung finden. Auch eine Feuchtigkeitsmessung ist zusätzlich oder alternativ möglich.

Zum vierten kann zusätzlich oder unabhängig hiervon die Laufzeit des Verdampfers (im Wärmepumpenbetrieb mit eingeschaltetem Kompressor und eingeschalteter Luftfördereinrichtung) während des jeweilig durchzuführenden Geschirrspülprogramms als Eingangsparameter für eine Kontrolle, insbesondere Regelung und/oder Steuerung, des Nachlaufbetriebs bezüglich Einschaltzeit und/oder Einschaltdauer Verwendung finden. Je länger die Laufzeit des Verdampfers ist, desto länger kann die Zeit bis zum Einschalten der Luftfördereinrichtung und/oder je länger kann die Nachlaufzeitdauer sein.

Insbesondere sind/ist in jeder der vier genannten Arten die Nachlaufzeitdauer und/oder der zeitliche Abstand bis zum Einschalten der Luftfördereinrichtung (, d.h. der zeitliche Abstand zwischen dem Ende der während des jeweiligen Geschirrspülprogramms letzten mittels der Wärmepumpe durchgeführten Aufheizphase von Spülflüssigkeit, ab welchem der Kompressor und die Luftfördereinrichtung ausgeschaltet wurden, und dem Einschaltzeitpunkt der Luftfördereinrichtung (bei ausgeschaltet bleibendem Kompressor,) für den Nachlaufbetrieb derart bemessen, dass eine hinter und/oder neben der Geschirrspülmaschine befindliche Gebäudewand und/oder Küchenmöbelwand an ihrer Oberfläche, die von der die Struktur des Verdampfers während des Wärmepumpenbetriebs durchströmenden Luft nach dem Herausströmen aus der Geschirrspülmaschine direkt oder indirekt beströmt wird, insbesondere die auf Höhe des Verdampfers in dessen nächstgelegenem Bereich liegt, bis zu einer Temperatur oberhalb des Taupunkts für Wasser aufgewärmt ist, um so eine Kondenswasserbildung an der Gebäudewand und/oder Küchenmöbelwand zuverlässig vermeiden zu können.

Um die Gebäudewand und/oder Küchenmöbelwand in der Zeit nach der Spülphase des jeweilig durchzuführenden Geschirrspülprogramms, während der dessen Spülgang umgesetzt wird, bis zum Einschalten der Luftfördereinrichtung für den Nachlaufbetrieb hinreichend zu erwärmen, kann insbesondere die Abwärme der Geschirrspülmaschine nach ihrem Abschalten bzw. nach Abschalten der Wärmepumpe im Spülgang ausreichend sein. Dann kann auf eine Zusatzheizung für das Wiedererwärmen der zuvor während des Wärmepumpenbetriebs kalt gewordenen Gebäudewand und/oder Küchenmöbelwand verzichtet werden.

Die Erfindung betrifft ferner ein Verfahren zum Betreiben einer Geschirrspülmaschine mit zumindest einer Wärmepumpe, die zumindest einen Kompressor, einen Verflüssiger, ein Expansionsorgan und einen Verdampfer umfasst, die untereinander über Leitungsbereiche zur Weiterleitung eines im Betrieb den Aggregatzustand wechselnden Arbeitsmediums verbunden sind, wobei der Wärmepumpe zumindest eine Zuleitung und eine Ableitung von in der Geschirrspülmaschine zirkulierbarer Spülflüssigkeit zugeordnet sind, und wobei zumindest eine Luftfördereinrichtung vorgesehen ist, welches dadurch gekennzeichnet ist, dass die Luftfördereinrichtung nach dem Ende der letzten mittels der Wärmepumpe durchgeführten Aufheizphase für Spülflüssigkeit, insbesondere nach dem Ende der Klarspülphase, zumindest eines durchzuführenden Geschirrspülprogramms, während der in ein oder mehreren Teilspülphasen die zum Reinigen von Geschirr, Gläsern oder ähnlichem Spülgut jeweilig verwendete Spülflüssigkeit in zumindest einer Aufheizphase mittels der Wärmepumpe erwärmt wird, für eine Nachlaufzeitdauer betrieben wird.

Dabei ist die Luftfördereinrichtung zumindest außerhalb der Spülphase des jeweilig durchzuführenden Geschirrspülprogramms und damit außerhalb dessen umzusetzenden Spülgangs, insbesondere nach dem Ende dessen Klarspülphase, ohne Betrieb der Wärmepumpe einschaltbar und betreibbar. Insbesondere ist während der Nachlaufphase der Kompressor der Wärmepumpe ausgeschaltet.

Wie oben beschrieben, ist bei diesem Verfahren möglich und vorteilhaft, dass die Luftfördereinrichtung mit einem zeitlichen Abstand, insbesondere von 3 bis 5 Minuten, nach Ende des Spülgangs einschaltbar ist. Bereits dann kann ein ausreichendes Abtropfen von Kondenswasser und/oder Tauwasser vom Verdampfer sichergestellt sein.

Vorteilhaft kann die Zeitdauer der Nachlaufphase und/oder der zeitliche Abstand, der zwischen dem Ende der letzten mittels der Wärmepumpe durchgeführten Aufheizphase für Spülflüssigkeit, insbesondere zwischen dem Ende der Klarspülphase, des jeweilig durchzuführenden Geschirrspülprogramms und dem Start der Nachlaufphase der Luftfördereinrichtung vergeht, abhängig von einer gemessenen Temperatur der Umgebungsluft im Raum am Aufstellungsort oder Einbauort der Geschirrspülmaschine und/oder abhängig von einer nach Ende des Spülgangs im Nahbereich der Gebäudewand gemessenen Temperatur sein.

Im Rahmen der Erfindung wird jeweils unter den Begriffen "gemessene Temperatur" oder "ermittelte Temperatur" insbesondere verstanden, dass die Temperatur direkt, vorzugsweise über zumindest einen Temperatursensor, erfasst wird, oder aber auch indirekt ermittelt wird. Insbesondere kann eine indirekte Messung der Temperatur dadurch erfolgen, dass zumindest ein sie repräsentierender oder charakterisierender Parameter ermittelt wird.

Insbesondere kann es günstig sein, wenn mittels zumindest eines in der Geschirrspülmaschine bereits für deren Geschirrspülprogrammbetrieb sowieso vorhandenen Sensors, insbesondere Temperatursensors, die Ausgangstemperatur der Umgebungsluft am Aufstellort oder Einbauort der Geschirrspülmaschine vor dem und/oder beim Start des Wärmepumpenbetriebs des jeweils durchzuführenden Geschirrspülprogramms erfasst wird, wenn sich nach einer ausreichenden Stillstandszeit der Geschirrspülmaschine deren Temperatur an die Temperatur der Umgebungsluft angeglichen hat. Ein solcher, eh schon vorhandener Temperatursensor kann z.B. ein im Flüssigkeitsumwälzkreislauf, insbesondere im Pumpensumpf, der Geschirrspülmaschine angeordneter Temperatursensor zur Bestimmung der Spülflüssigkeitstemperatur sein. Die Nachlaufzeitdauer der Luftfördereinrichtung und/oder der zeitliche Abstand bis zum Einschalten der Luftfördereinrichtung nach dem Ende des Wärmepumpenbetriebs des jeweilig durchzuführenden Geschirrspülprogramms können/kann dann in günstiger Weise in Abhängigkeit von der derart bestimmten Ausgangstemperatur der Umgebungsluft automatisiert eingestellt werden. Insbesondere kann die Nachlaufzeitdauer der Luftfördereinrichtung und/oder der zeitliche Abstand bis zum Einschalten der Luftfördereinrichtung umso kürzer sein, je höher die mittels des schon vorhandenen Sensors gemessene Ausgangstemperatur der Umgebungsluft ist.

Zusätzlich oder unabhängig hiervon kann es ggf. auch zweckmäßig sein, wenn die Temperatur der Umgebungsluft am Aufstellort oder Einbauort der Geschirrspülmaschine mittels zumindest eines in der Umgebung der Geschirrspülmaschine gesondert oder extra vorgesehenen Sensors, insbesondere Temperatursensors, ermittelt wird, und für die automatisierte Einstellung der Nachlaufzeitdauer der Luftfördereinrichtung und/oder des zeitlichen Abstands bis zum Einschalten der Luftfördereinrichtung herangezogen wird. Insbesondere kann es vorteilhaft sein, im Nahbereich der Luftauslassöffnung und/oder im Nahbereich einer Gebäudewand und/oder Küchenmöbelwand, welche an die Luftauslassöffnung der Geschirrspülmaschine angrenzt, aus welcher die die Struktur des Verdampfers während des Wärmepumpenbetriebs durchströmende Luft ausströmt, zumindest einen Sensor, insbesondere Temperatursensor, eigens vorzusehen, um dort die Temperatur - vorzugsweise am und/oder nach dem Ende des Wärmepumpenbetriebs des jeweiligen Geschirrspülprogramms zu erfassen. Diese gemessene Temperatur kann dann von zumindest einer Kontrolleinheit für die automatisierte Einstellung der Nachlaufzeitdauer der Luftfördereinrichtung und/oder des zeitlichen Abstands bis zum Einschalten der Luftfördereinrichtung berücksichtigt werden.

Insbesondere kann es ggf. zweckmäßig sein, wenn zusätzlich oder unabhängig hiervon die Laufzeit des Verdampfers (d.h. die Laufzeit des Wärmepumpenbetriebs mit eingeschaltetem Kompressor und eingeschalteter Luftfördereinrichtung) dazu herangezogen wird, zumindest einen Parameter zu ermitteln, der die Temperatur der Luft im Nahbereich einer Gebäudewand und/oder Küchenmöbelwand repräsentiert, welche an die Luftauslassöffnung der Geschirrspülmaschine angrenzt, aus welcher die die Struktur des Verdampfers während des Wärmepumpenbetriebs durchströmende Luft ausströmt. Die Laufzeit des Verdampfers spiegelt also als einen die Temperatur der Umgebungsluft im Nahbereich der Luftausströmungsöffnung der Geschirrspülmaschine beeinflussenden Parameter wider, der daher als ein Faktor in die Ermittlung der Nachlaufzeitdauer der Luftfördereinrichtung und/oder des zeitlichen Abstands bis zum Einschalten der Luftfördereinrichtung einfließen kann.

Besonders günstig kann es sein, wenn sowohl die Ausgangstemperatur der Umgebungsluft, die vor und/oder bei Inbetriebnahme der Wärmepumpe für das jeweilig durchzuführendes Geschirrspülprogramm nach einer Stillstandsphase der Geschirrspülmaschine vorliegt, als auch die Laufzeit des Verdampfers als Parameter oder Einflussfaktoren für die Temperatur im Nahbereich der Gebäudewand und/oder Küchenmöbelwand, welche an die Luftauslassöffnung der Geschirrspülmaschine angrenzt, aus welcher die die Struktur des Verdampfers während des Wärmepumpenbetriebs durchströmende Luft ausströmt, herangezogen werden.

Insbesondere kann es vorteilhaft sein, wenn die Temperatur am Verdampfer mittels eines ihm zugeordneten Temperatursensors zu Beginn des Wärmepumpenbetriebs des jeweilig durchzuführenden Geschirrspülprogramms erfasst wird und dann in Verbindung mit ein oder mehreren, vorzugsweise in einer Speichereinheit abgespeicherten, Temperaturverlaufskurven, die die Verdampfertemperatur in Abhängigkeit von der Laufzeit der Wärmepumpe ab dem Startzeitpunkt der Wärmepumpe je nach gewähltem Geschirrspülprogramm wiedergeben, von zumindest einer Kontrolleinheit Rückschlüsse auf die Temperatur der Umgebungsluft im Nahbereich der - vorzugsweise rückseitigen - Luftauslassöffnung der Geschirrspülmaschine gezogen werden, welche sich dort am und/oder nach dem Ende der letzten mittels der Wärmepumpe durchgeführten Spülflüssigkeits- Aufheizphase ergibt. Die derart ermittelte Temperatur im Nahbereich einer Gebäudewand und/oder Küchenmöbelwand, die an die Luftauslassöffnung der Geschirrspülmaschine angrenzt, kann dann von der Kontrolleinheit oder einer weiteren Kontrolleinheit zur automatisierten Einstellung der Nachlaufzeitdauer der Luftfördereinrichtung und/oder des zeitlichen Abstands zwischen dem Ende des Wärmepumpenbetriebs und dem Einschalten der Luftfördereinrichtung herangezogen werden.

Vorteilhaft kann es nach einer weiteren Weiterbildung der Erfindung auch sein, die Ausgangstemperatur der Umgebungsluft am Aufstellort oder Einbauort der Geschirrspülmaschine vor dem und/oder beim Start des Wärmepumpenbetriebs des jeweilig durchzuführenden Geschirrspülprogramms - insbesondere mittels eines in der Geschirrspülmaschine sowieso vorhandenen Sensors wie z.B. Temperatursensors, bevorzugt mittels eines dem Verdampfer zugeordneten Temperatursensors, - zu ermitteln, wenn sich nach einer ausreichenden Stillstandszeit der Geschirrspülmaschine deren Temperatur an die Temperatur der Umgebungsluft angeglichen hat, und dann am Ende der letzten mittels der Wärmepumpe durchgeführten Aufheizphase für Spülflüssigkeit des jeweilig durchzuführenden Geschirrspülprogramms, die Temperatur am Verdampfer (= Verdampferendtemperatur) - insbesondere mittels des diesem zugeordneten Temperatursensors, - zu ermitteln. Die Verdampferendtemperatur korreliert dabei mit der Temperatur der Luft, die aus der - vorzugsweise rückseitigen - Luftauslassöffnung im unterhalb des Spülbehälters angeordneten Basisträger der Geschirrspülmaschine nach Durchströmen der Struktur, insbesondere der Luftkanäle zwischen den Lamellen, des Verdampfers am Ende des Wärmepumpenbetriebs mittels der Luftfördereinrichtung ausgeblasen wird. Anhand der Differenz zwischen der Verdampferendtemperatur und der Ausgangstemperatur des Verdampfers, die der Temperatur der Umgebungsluft entspricht, durch Bildung des Quotienten aus Verdampferendtemperatur und Verdampferausgangstemperatur, oder durch eine sonstige Relation zwischen der Verdampferendtemperatur und der Verdampferausgangstemperatur können in günstige Weise die Nachlaufzeitdauer der Luftfördereinrichtung und/oder der zeitlichen Abstand bis zum Einschalten der Luftfördereinrichtung kontrolliert, insbesondere gesteuert und/oder geregelt, werden. Beispielsweise können die Nachlaufzeitdauer der Luftfördereinrichtung und/oder der zeitliche Abstand bis zum Ausschalten der Luftfördereinrichtung zweckmäßigerweise umso kürzer gehalten werden, je geringer die ermittelte Differenz zwischen der Verdampferendtemperatur und der Ausgangstemperatur der Umgebungsluft ist.

Besonders günstig kann es sein, einen Temperaturfühler am Verdampfer zu platzieren und mittels diesem die Anfangstemperatur des Verdampfers zu Beginn des Wärmepumpenbetriebs als Maß für die Umgebungslufttemperatur zu messen und zum Ende des Wärmepumpenbetriebs die Endtemperatur des Verdampfers als Maß für die Luftaustrittstemperatur zu messen. Aus der gemessenen Anfangstemperatur und der gemessenen Endtemperatur des Verdampfers lassen/kann dann die Nachlaufzeitdauer der Luftfördereinrichtung und/oder der zeitliche Abstand bis zum Einschalten der Luftfördereinrichtung kontrolliert, insbesondere gesteuert und/oder geregelt, werden, insbesondere derart, dass feuchtekritische Zustände im Nahbereich der Luftauslassöffnung weitgehend vermieden werden. Zweckmäßigerweise kann unter Berücksichtigung von Anfangstemperatur sowie Endtemperatur des Verdampfers, insbesondere der jeweilig ermittelten Relation zwischen der Anfangstemperatur und der Endtemperatur des Verdampfers, dafür gesorgt werden, dass die Nachlaufzeitdauer der Luftfördereinrichtung und/oder der zeitliche Absatnd bis zum Einschalten der Luftfördereinrichtung (nach dem Ende des Wärmepumpenbetriebs) derart eingestellt werden, dass die aus der Geschirrspülmaschine mittels der Luftfördereinrichtung während der Nachlaufphase ausgeblasene Luft die Oberfläche einer Gebäudewand und/oder einer Küchenmöbelwand, die zuvor in der jeweiligen Spülflüssigkeits- Aufheizphase bei laufendem Betrieb der Wärmepumpe (Kompressor ist in Betrieb) durch die durch den dann aktiv betriebenen Verdampfer stark abgekühlte Luft sehr kalt wurde, insbesondere unter die Taupunkttemperatur der Umgebungsluft abgekühlt wurde, jetzt während der Zeitdauer der Nachlaufphase wieder auf eine für Kondensation bzw. Kondenswasserbildung oder gar damit einhergehende Schimmelbildung unkritische Temperatur erhöht wird, die vorzugsweise über der Taupunkttemperatur der außerhalb der Geschirrspülmaschine vorhandenen Umgebungsluft liegt.

Sonstige Weiterbildungen der Erfindung sind in den Unteransprüchen wiedergegeben.

Die vorstehend erläuterten und/oder in den Unteransprüchen wiedergegebenen vorteilhaften Aus- und Weiterbildungen der Erfindung können dabei - außer z.B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen, jeweils in einer schematischen Prinzipskizze:

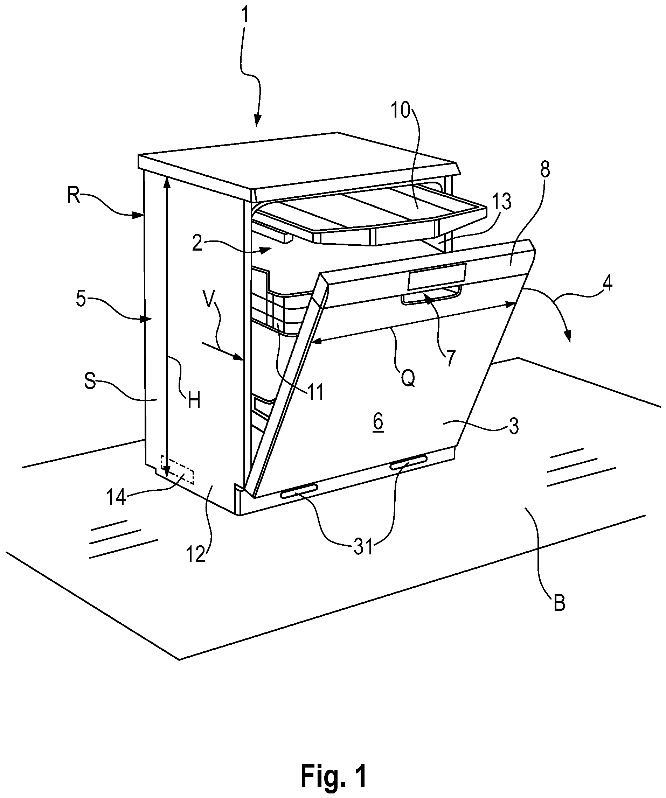

- Fig. 1: schematisch in perspektivischer Ansicht von schräg vorne eine hier beispielhaft dargestellte Haushaltsgeschirrspülmaschine mit einer nach unten aufschwenkbaren Tür und mit einem unterhalb ihres Spülbehälters angeordneten Sockel bzw. Basisträger zur Aufnahme von Funktionselementen, in welchem anschluss- und platztechnisch günstig zusätzlich Komponenten einer Wärmepumpe bzw. Wärmepumpenanordnung zum Erwärmen von Spülflüssigkeit während zumindest einer Teilspülphase eines durchzuführenden Geschirrspülprogramms untergebracht sind,

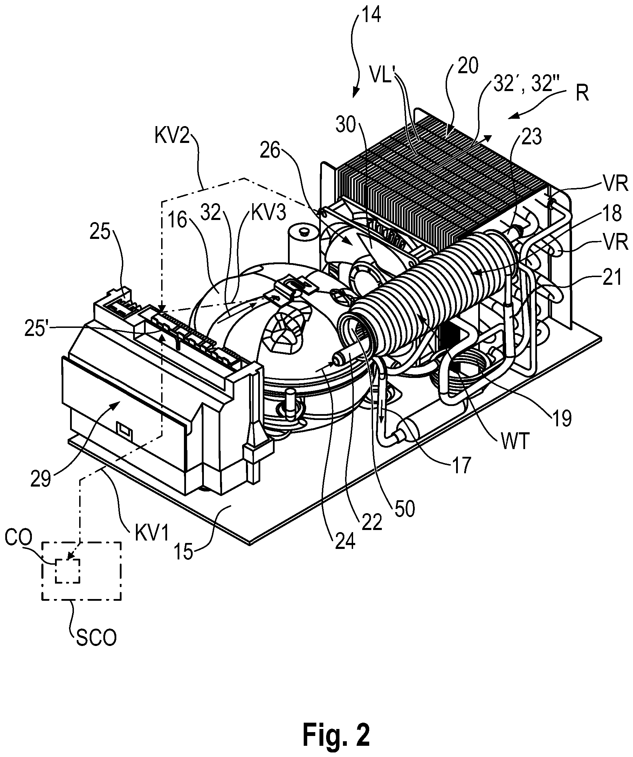

- Fig. 2: eine nur beispielhafte, herausgezeichnete, perspektivische Darstellung einer Wärmepumpe, bei der hier in Einbaustellung ihr Verdampfer im Nahbereich einer rückwärtigen Wandung des Gerätekorpus der Haushaltsgeschirrspülmaschine gelegen ist,

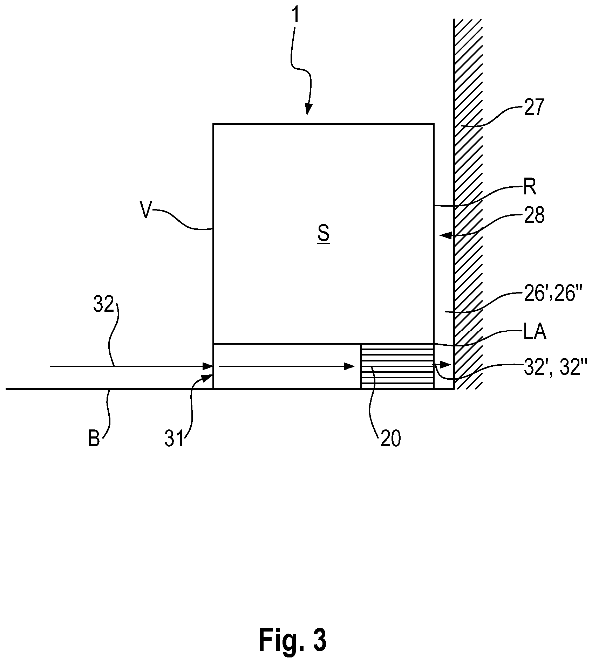

- Fig. 3: eine herausgezeichnete, schematische, seitliche Ansicht einer vor einer Gebäudewand stehenden Haushaltsgeschirrspülmaschine - wie z.B. die von Figur 1 - mit einer Wärmepumpe, deren Verdampfer im hinteren Bereich des Basisträgers unterhalb des Spülbehälters der Haushaltsgeschirrspülmaschine angeordnet ist, und

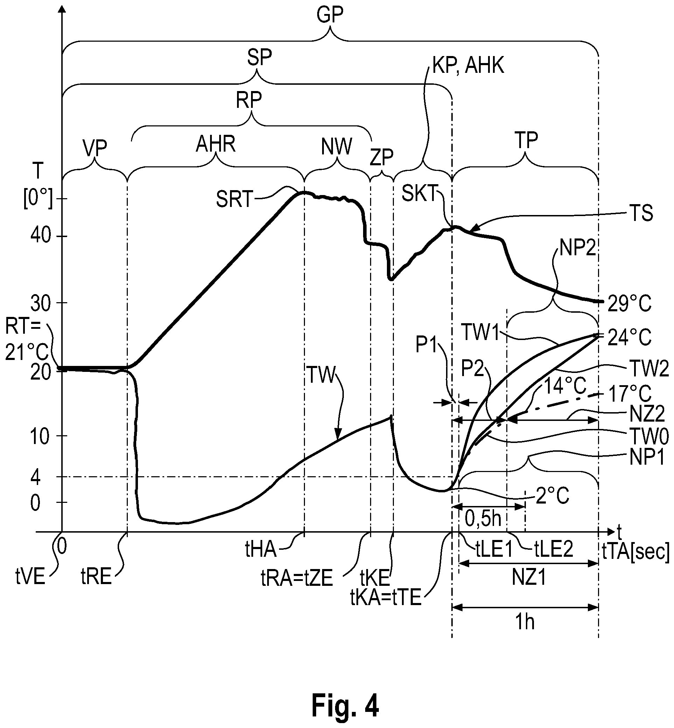

- Fig. 4: ein Zeit-Temperatur-Diagramm, bei dem oben die Innenraumtemperatur im Spülbehälter der Haushaltsgeschirrspülmaschine und unten die Temperatur an der Oberfläche der gebäudeseitigen Rückwand hinter der Haushaltsgeschirrspülmaschine während der Spülphase und der darauf folgenden Trocknungsphase eines jeweilig durchzuführenden Geschirrspülprogramms aufgezeichnet ist, und wobei strichpunktiert der Temperaturverlauf ohne Nachlaufphase einer dem Verdampfer der Wärmepumpe zugeordneten Luftfördereinrichtung und durchgezeichnet jeweils der Temperaturverlauf einer ersten und einer zweiten Nachlaufbetriebsart einer der Wärmepumpe zugeordneten Luftfördereinrichtung eingezeichnet ist.

Elemente mit gleicher Funktion und Wirkungsweise sind in den Figuren mit denselben Bezugszeichen versehen.

In Figur 1 ist schematisch in perspektivischer Ansicht beispielhaft eine Geschirrspülmaschine 1, nämlich eine Haushaltsgeschirrspülmaschine, dargestellt, ohne dass die Erfindung darauf beschränkt wäre. Ggf. ist sie auf ein anderes Haushaltsgerät wie z.B. auf eine Waschmaschine oder einen Waschtrockner übertragbar, bei welchem eine Flüssigkeit mittels Wärmepumpe energieeffizient erwärmt werden soll.

Die im folgenden beschriebene Haushaltsgeschirrspülmaschine nach Figur 1 weist als Bestandteil eines teilweise nach außen offenen oder geschlossenen Gerätekörpers 5 einen Spülbehälter 2 zur Aufnahme von zu bearbeitendem Spülgut bzw. zu reinigenden Spülgutteilen wie Geschirr, Töpfen, Bestecken, Gläsern, Kochutensilien u. ä. auf. Im Spülbehälter 2 kann das Spülgut zum Beispiel in Geschirrkörben 11, insbesondere in einem unteren Geschirrkorb und in einem mit Höhenabstand oberhalb von diesem angeordneten, oberen Geschirrkorb, und/oder in einer Besteckschublade 10 anordenbar, insbesondere halterbar, sein. Es kann mittels ein oder mehrerer Spülflüssigkeits-Beaufschlagungsvorrichtungen wie z.B. rotierbarer Sprüharme, rotierbarer oder feststehender Sprühdüsen, und/oder sonstiger Flüssigkeitsverteileinheiten in ein oder mehreren Teilspülphasen eines jeweilig durchzuführenden Geschirrspülprogramms von sog. Spülflotte bzw. Spülwasser 24 beaufschlagbar sein. Als Spülflotte bzw. Spülflüssigkeit 24 wird dabei vorzugsweise frisches und/oder insbesondere im Spülbetrieb der Haushaltsgeschirrspülmaschine 1 umlaufendes Wasser je nach Teilspülphase mit oder ohne zugesetztes Reinigungsmittel, und/oder Klarspülmittel, und/oder Trocknungsmittel verstanden, welches in Kontakt mit dem Spülgut kommt. Die Spülflotte bzw. Spülflüssigkeit 24 kann zusätzlich auch mehr oder weniger mit Verschmutzungen aus dem laufenden Spülbetrieb versetzt sein, die während der Durchführung der ein oder mehreren Teilspülphasen - wie z.B. Vorspülen, Reinigen, Zwischenspülen, Klarspülen - eines jeweilig durchzuführenden Geschirrspülprogramms von den zu reinigenden Spülgutteilen abgespült werden. Ggf. kann für die ein oder mehreren Teilspülphasen des jeweilig durchzuführenden Geschirrspülprogramms auch Spülflüssigkeit herangezogen werden, die in zumindest einer Teilspülphase wie z.B. der Klarspülphase eines zeitlich vorausgehenden Geschirrspülprogramms schon benutzt wurde, dabei aber relativ sauber blieb, und dann in einem Speicher als Brauchwasser gespeichert wurde. Insbesondere kann der Haushaltsgeschirrspülmaschine jeweils neu zugeführte Spülflotte vorab, d.h. vor ihrem Aufbringen auf die zu spülenden Spülgutteile, einen Ionentauscher oder eine sonstige Enthärtungsvorrichtung zur Enthärtung durchlaufen haben.

Der Spülbehälter 2 kann wie hier im Ausführungsbeispiel einen zumindest im Wesentlichen rechteckförmigen Grundriss mit einer (in Betriebsaufstellung der Haushaltsgeschirrspülmaschine 1) einem Benutzer zugewandten, vorderseitigen Beschickungsöffnung aufweisen, die durch eine Fronttür 3 verschließbar ist. In der Figur 1 ist die dem Benutzer zugewandte Vorderseite der Haushaltsgeschirrspülmaschine 1, insbesondere deren Spülbehälters 2, mit dem Bezugszeichen V versehen. Hier im Ausführungsbeispiel ist von drei vertikalen Wandungen 13 sowie zwei horizontalen Wandungen 13 des Spülbehälters 2 und von der frontseitigen Tür 3 in deren zumindest etwa vertikal aufrechten Schließendstellung ein Spülraum für das jeweilig zu reinigende und/oder zu trocknende Spülgut begrenzt. Im Einzelnen umfasst der Spülbehälter als horizontale Wandungen eine Decke (oben) und einen Boden (unten). An die dem Benutzer zugewandte Vorderseite V des Spülbehälters 2 grenzen in Querrichtung Q nach links hin eine linke, zumindest etwa vertikal aufrechte Seitenwand 13 und dieser gegenüberliegend nach rechts hin eine rechte, zumindest etwa vertikal aufrechte Seitenwand 13 an. Sie sind rückseitig durch eine zumindest nahezu vertikal aufrechte Rückwand 13 miteinander verbunden.

Das obere Ende der Fronttür oder Klappe 3, mittels der die frontseitige Beschickungsöffnung des Spülbehälters 2 an dessen Vorderseite V verschließbar ist, ist hier im Ausführungsbeispiel vorzugsweise um eine untere Horizontalachse nach vorne und unten aufschwenkbar. Diese Tür 3 ist in Figur 1 in teilweise geöffneter und dann schräg zur Vertikalen stehenden Stellung gezeigt. In ihrer Schließendstellung steht sie hingegen zumindest nahezu aufrecht und ist gemäß der Figur 1 zu ihrer Öffnung um eine untere Horizontalachse nach vorne und unten in Richtung des Pfeils 4 aufschwenkbar, so dass sie in vollständig geöffneter Stellung (Öffnungsendstellung) zumindest nahezu horizontal bzw. waagerecht liegt. Auch andere Bewegungen der Tür, z.B. über ein Parallelogramm oder eine andere Mehrgelenkanordnung, sind möglich.

Die Tür kann außenseitig, d.h. auf ihrer einem Benutzer zugewandten Vorderseite, mit einer Dekorplatte oder Türverkleidung versehen sein. Im Ausführungsbeispiel von Figur 1 ist die Fronttür 3 an ihrer in Schließstellung vertikalen, dem Benutzer zugewandten Außen- bzw. Vorderseite mit einer Dekorplatte 6 versehen, um damit eine optische und/oder haptische Aufwertung und/oder eine Anpassung an umliegende Küchenmöbel zu erfahren.

Wenn die Fronttür 3 in ihrer zumindest nahezu vertikalen Schließendstellung ist, kann bei einer sogenannten teilintegrierbaren oder vollintegrierbaren Haushaltsgeschirrspülmaschine 1 die Vorderseite der Fronttür 3 einen Teil einer Küchenfront aus nebeneinander stehenden Küchenmöbeln bilden oder bei einer allein stehenden Haushaltsgeschirrspülmaschine auch ohne Bezug zu weiteren Möbeln sein.

Alternativ ist es auch möglich, eine seitlich an einer Seitenwand des Spülbehälters 2 angeschlagene Tür vorzusehen.

Möglich ist es auch, einen ringsum geschlossenen Spülbehälter mit einer Beschickungsöffnung nach oben hin vorzusehen, die vorzugsweise mit einer in ihrer Schließendstellung im Wesentlichen horizontal angeordneten Tür verschließbar ist.

Die Haushaltsgeschirrspülmaschine 1 ist hier im Ausführungsbeispiel von Figur 1 nur beispielhaft als allein bzw. frei stehendes Gerät am Fußboden B, oder als sog. teilintegrierbares Gerät ausgebildet und am Fußboden B innerhalb einer Einbaunische zwischen benachbarten Küchenmöbeln unterhalb einer Küchenarbeitsplatte aufgestellt. In Bezug auf letzteren Fall sind die benachbarten Küchenmöbel sowie die Küchenarbeitsplatte in der Figur 1 der zeichnerischen Einfachheit halber weggelassen.

Im unteren Bereich der Haushaltsgeschirrspülmaschine 1 befindet sich hier im Ausführungsbeispiel unterhalb deren Spülbehälter 2 ein Sockel bzw. ein Basisträger 12 insbesondere zur Aufnahme von Funktionselementen, wie etwa einer Umwälzpumpe (nicht eingezeichnet) zum Umwälzen der Spülflotte 24 in einem Umwälzkreislauf und/oder einer Entleerungspumpe (nicht eingezeichnet) zum Herausfördern der Spülflotte 24 aus einem mit dem Spülbehälter 2 fluidisch verbundenen Pumpensumpf, und hier im Ausführungsbeispiel auch einer nach dem erfindungsgemäßen Funktionsprinzip ausgebildeten und arbeitenden Wärmepumpe bzw. Wärmepumpenanordnung 14. Diese lässt sich dort platz- sowie anschlusstechnisch günstig unterbringen. In der Figur 1 ist diese Unterbringung der Wärmepumpenanordnung 14 im Basisträger bzw. Sockel 12 lediglich durch ein strichpunktiertes Rechteck symbolisiert. Eine Unterbringung der Wärmepumpenanordnung im Sockel ist aber - je nach Bauform der Haushaltsgeschirrspülmaschine - nicht zwingend, d.h. abweichend vom vorteilhaften Ausführungsbeispiel von Figur 1 kann die Wärmepumpenanordnung teilweise oder ganz auch außerhalb des Sockels 12 wie z.B. außen an einer Seitenwand- und/oder Rückwand des Spülbehälters 2 angeordnet sein.

Der Gerätekörper 5 der Haushaltsgeschirrspülmaschine 1 weist hier im Ausführungsbeispiel von Figur 1 zwei einander gegenüber gelegene Seitenwände S auf. Rückseitig ist eine Rückwand R vorgesehen, die etwa auch durchbrochen sein kann und vorzugsweise einen Durchgriff auf den Verdampfer 20 der Wärmepumpe 14 ermöglicht.

Der beweglichen Tür 3 ist im Ausführungsbeispiel gemäß der Figur 1 in ihrem oberen Bereich beispielhaft eine in Quer- bzw. Breitenrichtung Q der Haushaltsgeschirrspülmaschine 1 erstreckte äußere, vorderseitige Blende 8 zugeordnet, die Anzeigen und/oder Bedienelemente umfassen kann und dann auch als Anzeige- und/oder Bedienblende dient. Vorzugsweise im Bereich deren unteren Rands kann wie hier im Ausführungsbeispiel von Figur 1 zweckmäßigerweise eine von der Vorderseite bzw. Frontseite her zugängliche Eingriffsöffnung 7 zum manuellen Öffnen und/oder Schließen der Tür 3 vorgesehen sein. Diese Eingriffsöffnung 7 ist hier beispielhaft nur im quermittigen Bereich der Tür 3 vorgesehen, was jedoch nicht zwingend ist. Auch eine zumindest nahezu über die gesamte Breite der Haushaltsgeschirrspülmaschine, also zum Beispiel bei einer 60 cm breiten Haushaltsgeschirrspülmaschine über 50 bis 60 Zentimeter, in Querrichtung Q erstreckte Eingriffsöffnung 7 ist möglich. Alternativ zu einer solchen teilintegrierbaren oder "stand- alone", d.h. freistehend, aufstellbaren Haushaltsgeschirrspülmaschine, deren Fronttür in ihrem oberen Randbereich eine Bedienblende mit in der vertikalen Schließendstellung der Fronttür vorderseitig sichtbaren Anzeige- und/oder Bedienelementen aufweist, kann bei einer sogenannten vollintegrierbaren Haushaltsgeschirrspülmaschine die gesamte Front deren Fronttür von einer Abdeckung oder Frontverkleidung wie z.B. einem Küchenmöbelblatt bedeckt sein. Bedien- und/oder Anzeigeelemente einer Bedienblende können bei dieser Türvariante beispielsweise am oberseitigen Außenrand der Fronttür vorgesehen sein, so dass die Bedien- und/oder Anzeigeelemente nur in einer geöffneten Stellung der Fronttür für einen Benutzer am oberseitigen Türrand sichtbar und/oder zugänglich werden. Auch weitere Türvarianten sind je nach Bautyp der Haushaltsgeschirrspülmaschine und/oder Aufstell- oder Einbaubedingungen natürlich möglich.

In Querrichtung Q hat die Geschirrspülmaschine häufig eine Erstreckung von 45, 50 oder 60 Zentimetern. In Tiefenrichtung von ihrer Vorderseite V nach hinten liegt ihre Erstreckung häufig ebenfalls bei etwa 60 Zentimetern. Die Werte sind nicht zwingend. Auch muss die Haushaltsgeschirrspülmaschine 1 nicht wie in der Figur 1 direkt auf einem Fußboden B aufstehen, sondern kann ggf. auch auf dem Bodenbrett eines Küchenunterschranks oder innerhalb eines sonstigen Küchenmöbels höher eingebaut, oder auf einem Sockel oder einer Küchenarbeitsplatte mit einem Höhenabstand zum Fußboden B aufgestellt sein. Insbesondere kann der Höhenabstand so gewählt sein, dass einem Benutzer z.B. beim Beladen oder Entladen der Geschirrkörbe, insbesondere des unteren Geschirrkorbs, der Geschirrspülmaschine, oder beim Nachfüllen von Klarspülmittel und/oder Reinigungsmittel in eine auf der Innenwandseite der Fronttür 3 vorgesehenen Dosiereinheit nur eine geringe oder gar keine Bückbewegung abverlangt wird, wenn die Fronttür 3 in ihre zumindest etwa waagerechte Öffnungsendstellung gebracht ist. Die Unterkante der Geschirrspülmaschine 1 kann dann bei dieser gegenüber dem Fußboden B erhöhten Aufstellung oder Einbaustellung vorzugsweise ca. 40 bis 110 Zentimeter über dem Boden B liegen. Die vertikale Höhe (Erstreckung in Höhenrichtung H) der Haushaltsgeschirrspülmaschine 1 kann je nach Bautyp und/oder Einbaubedingung ebenfalls variieren bzw. unterschiedlich sein.

Häufig ist eine solche Haushaltsgeschirrspülmaschine 1 in horizontal kleinem Abstand vor einer Gebäudewand 27 angeordnet, so dass zwischen der Rückseite des Gerätekorpus 5 und der Gebäudewand 27 ein enger Spaltfreiraum bzw. eine Lücke 28 vorhanden ist. Sie kann - z.B. bei Aufstellung in einer Einbaunische zwischen benachbarten Küchenmöbeln wie z.B. Küchenmöbel- Unterschränken - oberhalb von einer Arbeitsplatte überdeckt sein, was den Luftaustausch in diesem Spaltbereich 28 zwischen der Rückseite der Haushaltsgeschirrspülmaschine 1 und der rückseitigen Gebäudewand 27 zusätzlich erschwert. Auch kann ggf. eine Gebäudewand neben bzw. seitlich einer Seitenwand S des Gerätekorpus 5 der Haushaltsgeschirrspülmaschine 1 vorhanden sein, z.B. wenn die Haushaltsgeschirrspülmaschine in einem Eckbereich eines Wohnraums, insbesondere Küchenraums, aufgestellt ist, was den Luftaustausch im rückseitigen Spaltfreiraum 28 zur Seite hin nochmals schwieriger machen kann. Im Spaltbereich zwischen der Seitenwand S des Gerätekorpus 5 und der ihr nahe gelegenen seitlichen Gebäudewand kann dann zudem ein Luftaustausch ebenfalls problematisch sein.

Die Wärmepumpe bzw. Wärmepumpenanordnung 14 der Haushaltsgeschirrspülmaschine 1 ist in der Figur 2 in einer beispielhaften Ausbildung mit ihren Funktionskomponenten als eine kompakte Baueinheit dargestellt. Mit ihrer Hilfe kann die im Umwälzpumpenkreislauf bzw. Hydraulikkreislauf der Haushaltsgeschirrspülmaschine 1 während mindestens einer flüssigkeitsführenden Teilspülphase wie z.B. der Reinigungsphase und/oder Klarspülphase eines durchzuführenden Geschirrspülprogramms jeweilig vorhandene Spülflüssigkeit, für die ein Aufheizen gefordert ist, und/oder die zum Umwälzen im Umwälzkreispumpenkreislauf vorgesehene Spülflüssigkeit, für die ein Aufheizen gefordert ist, zumindest teilweise erwärmt werden. D.h. entweder wird die Spülflüssigkeit, für die ein Aufheizen in der jeweiligen Teilspülphase gefordert ist, von der Wärmepumpe bis auf eine Vorerwärmungstemperatur vorerwärmt und dann anschließend mittels einer Flüssigkeitsheizung wie z.B. einem Durchlauferhitzer auf ihre gewünschte Soll-Endtemperatur gebracht, oder die Spülflüssigkeit wird nur von der Wärmepumpe alleine vollständig auf ihre jeweilig gewünschte Soll- Endtemperatur erwärmt, was insbesondere bei der Durchführung eines sogenannten Eco- Programms oder sonstigen Energiesparprogramms energetisch besonders günstig ist.

Hier im Ausführungsbeispiel ist die Wärmepumpe 14 insbesondere eine Kompressorpumpe, d.h., sie umfasst einen Kompressor bzw. Verdichter 16, mit dem mechanische Arbeit an einem in der Wärmepumpe 14 zirkulierenden Arbeitsmedium 17, etwa einem Propan/Butan- Gemisch oder R600a (Isobutan), geleistet werden kann. Der Kompressor 16, in dem die mechanische Arbeit am Arbeitsmedium 17 verrichtet wird, ist dabei elektrisch angetrieben.

Zusätzlich zum Kompressor 16 umfasst die Wärmepumpe bzw. Wärmepumpenanordnung 14 als Funktionseinheiten - die jeweils auch bauliche Einheiten sein können, jedoch nicht müssen - zumindest einen Verflüssiger 18, eine Expansionseinrichtung bzw. ein Expansionsorgan 19, zum Beispiel ein Expansionsventil oder eine Kapillare, und einen Verdampfer 20. Diese Funktionseinheiten 16, 18, 19, 20 sind untereinander über Leitungsbereiche bzw. Leitungsabschnitte 21 zur Weiterleitung des im Betrieb den Aggregatzustand wechselnden Arbeitsmediums 17 verbunden. Das durch die Wärmepumpenanordnung 14 bei deren Betrieb (Kompressor 16 ist eingeschaltet) strömende Arbeitsmedium 17 ist in der Figur 2 durch einen gesondert dargestellten Pfeil symbolisiert, der auch dessen Strömungsrichtung angibt.

Zusätzlich zu den genannten Komponenten umfasst die Wärmepumpenanordnung 14 zweckmäßigerweise zumindest eine Luftfördereinrichtung 26, die in ihre Luftförderrichtung betrachtet vor dem Verdampfer 20 angeordnet und diesem insbesondere für den Wärmepumpenbetrieb zugeordnet ist. Die Luftfördereinrichtung 26 weist vorzugsweise einen Lüfter oder ein Gebläse auf. Wenn die Wärmepumpe 14 in Betrieb ist, d.h. ihr Kompressor 16 läuft, um mittels des Verflüssigers 18 für eine oder während einer Teilspülphase, insbesondere Reinigungsphase und/oder Klarspülphase, des jeweilig durchzuführenden Geschirrspülprogramms, welche die Aufheizung der dafür jeweilig verwendeten oder zu verwendenden Spülflüssigkeit in zumindest einer Aufheizphase verlangt, diese Spülflüssigkeit auf eine gewünschte Soll- Temperatur zu erwärmen, fördert, insbesondere bläst die Luftfördereinrichtung 26 Umgebungsluft 32 durch die Struktur bzw. das Gebilde des Verdampfers 20, hier im Ausführungsbeispiel mit Förderrichtung von vorne nach hinten zur Rückwand R des Gerätekorpus 5 der Haushaltsgeschirrspülmaschine 1. Die Struktur des Verdampfers 20 umfasst dabei quer zur von vorne nach hinten, d.h. in Tiefenrichtung der Haushaltsgeschirrspülmaschine, gerichteten Luftförderrichtung verlaufende Abschnitte, insbesondere Mäander bzw. Schlingen oder Schleifen, eines vom Arbeitsmedium 17 durchströmbaren oder durchströmten Verdampferröhrchens VR des Verdampfers 20. Quer, insbesondere senkrecht, zu diesen Abschnitten des Verdampferröhrchens VR sind aufrecht stehende, flächige Wärmetauschelemente VL, insbesondere Lamellen, vorgesehen, die jeweils mit den Abschnitten des Verdampferröhrchens VR thermisch leitend verbunden sind. Die aufrechtstehenden, flächigen Wärmetauschelemente VL sind in Querabständen voneinander angeordnet und erstrecken sich hier in Tiefenrichtung der Haushaltsgeschirrspülmaschine 1, d.h. von vorne nach hinten. Dadurch ist zwischen je zwei in Querrichtung benachbarten, aufrechtstehenden Wärmetauschelementen VL ein Luftkanal bzw. Luftdurchgang vorhanden, der sich in Tiefenrichtung der Haushaltsgeschirrspülmaschine 1 erstreckt und in vorbestimmten Abständen in Tiefenrichtung und hier insbesondere auch in Höhenrichtung jeweils von einem Abschnitt des Verdampferröhrchens VR gequert wird. Dabei werden die Wärmetauschelemente VL quer zu ihrer Längserstreckung in Tiefenrichtung von den vom Arbeitsmedium 17 durchströmbaren oder durchströmten Abschnitten des Verdampferröhrchens VR durchdrungen. Auf diese Weise kann mittels der Luftfördereinrichtung 26 Umgebungsluft 32 durch die zwischen den Wärmetauschelementen WL vorhandenen Kanäle bzw. Durchgänge von vorne nach hinten zur Rückwand R des Gerätekorpus 5 der Haushaltsgeschirrspülmaschine 1 gefördert, insbesondere hindurchgeblasen, werden. Dabei wird der Umgebungsluft 32 von den Abschnitten des Verdampferöhrchens VR und den mit diesen wärmeleitend verbundenen Wärmetauschelementen VL Wärme entzogen und auf das Arbeitsmedium 17 übertragen. Die Luftfördereinrichtung 26 ist hier im Ausführungsbeispiel zweckmäßigerweise so angeordnet, dass bei deren laufenden Betrieb Umgebungsluft 32 aus dem die Geschirrspülmaschine 1 umgebenden Raum durch z.B. vorderseitige Lüftungsschlitze 31 und/oder durch Lücken, Ritzen, Aussparungen und/oder Öffnungen in den ein oder mehreren Wandungen des Basisträgers bzw. Gerätesockels der Haushaltsgeschirrspülmaschine 1 hindurch angesaugt wird, dabei den vor der Luftfördereinrichtung 26 angeordneten Kompressor 16 überströmt und dabei durch dessen Abwärme vorerwärmt wird, und vorzugsweise nach hinten (in Tiefenrichtung der Geschirrspülmaschine) zum Verdampfer 20 geblasen wird und an dessen ein oder mehreren, vorzugsweise mäandrierenden, vom Arbeitsmedium 17 durchströmbaren oder durchströmten Leitungsbereichen bzw. Leitungsabschnitten und/oder an den von diesen abstehenden Wärmetauschelementen VL, insbesondere Lamellen, entlangströmt. Hier im Ausführungsbeispiel ist entlang dem von der Luftfördereinrichtung 26 bewirkten Luftströmungsweg betrachtet die dem Verdampfer 20 zugeordnete Luftfördereinrichtung 26 also vorzugsweise zwischen dem Kompressor 16 und dem Lufteinlass des Verdampfers 20 positioniert. Dabei liegen der Kompressor 16, die diesem nachgeordnete Luftfördereinrichtung 26 sowie der Verdampfer 20 im Basisträger 12 insbesondere in einer vorzugsweise zumindest etwa geraden Linie hintereinander in Tiefenrichtung der Haushaltsgeschirrspülmaschine. Nach ihrem Durchtritt durch die Struktur des Verdampfers 20 wird die vom Verdampfer 20 derart abgekühlte Umgebungsluft 32' durch die dem Verdampfer 20 vorangestellte Luftfördereinrichtung 26 schließlich durch eine Aussparung bzw. Öffnung, d.h. durch einen Luftauslass LA in der Rückwand R des Gerätekorpus 5, insbesondere in der Rückwand R des Basisträgers 12, der Haushaltsgeschirrspülmaschine 1 hindurch nach außen in die Umgebung der Geschirrspülmaschine ausgeblasen, wo sie die hinter der Geschirrspülmaschine angeordnete Gebäudewand 27, insbesondere im dem Luftauslass LA gegenüberliegenden Bereich der Gebäudewand 27, beströmt (siehe Figur 3).

Der Wärmepumpe 14 sind zudem zumindest eine Zuleitung 22 und eine Ableitung 23 (hier unangeschlossen gezeichnet) von in der Haushaltsgeschirrspülmaschine 1 zirkulierbarer oder zirkulierender Spülflüssigkeit 24 zugeordnet. Über die Zuleitung bzw. Zuführleitung 22 strömt die jeweilig zu erwärmende Spülflüssigkeit 24 - z.B. aus einem Umwälzkreislauf, insbesondere Umwälzpumpenkreislauf (nicht eingezeichnet) der Haushaltsgeschirrspülmaschine 1 - in den Eingang zumindest eines Wärmeübertragungsbereichs 50, hier im Ausführungsbeispiel insbesondere eines Leitungs- bzw. Rohrabschnitts, hinein, der mit dem vom Arbeitsmedium 17 durchströmbaren oder durchströmten Verflüssiger 18, insbesondere dessen Verflüssigerröhrchen, in thermischem Kontakt steht, und durchströmt diesen Wärmeübertragungsbereich 50. Die im Wärmepumpenbetrieb vom Verflüssiger 18 erwärmte Spülflüssigkeit 24 verlässt den Ausgang des Wärmeübertragungsbereichs 50 über die Ableitung bzw. Abführleitung 23. Sie wird dann dem Umwälzkreislauf, insbesondere Umwälzpumpenkreislauf, an einer strömungsaufwärtsseitigen Stelle wie z.B. vorzugsweise dem zum Umwälzkreislauf gehörenden Spülraum im Spülbehälter 2 und/oder einem am Spülbehälter unterbodenseitig angeordneten Pumpensumpf, wieder zugeführt. Der Verflüssiger 18 und der von der Spülflüssigkeit 24 durchströmbare oder durchströmte Wärmeübertragungsbereich, hier insbesondere Rohrabschnitt, 50 bilden also zusammen einen Wärmeübertrager WT, in dem im laufenden Betrieb der Wärmepumpe 14 (bei eingeschaltetem Kompressor 16) Wärme vom Arbeitsmedium 17 auf die durch den Wärmeübertragungsbereich 50 strömende Spülflüssigkeit 24 transferiert wird. Die durch die Wärmeübertragungsvorrichtung WT fließende Spülflüssigkeit 24 ist in der Figur 2 durch einen gesondert dargestellten Pfeil symbolisiert.

Zweckmäßigerweise durchläuft im Wärmeübertrager WT die jeweilig zu erwärmende Spülflüssigkeit 24 den Wärmeübertragungsbereich, insbesondere WärmeübertragungsLeitungsabschnitt bzw. Rohrabschnitt, 50 im Gegenstromprinzip zum Arbeitsmedium 17, das den Verflüssiger 18 durchströmt. Auf diese Weise ist im Wärmeübertrager WT eine effiziente, d.h. mit hohem Wirkungsgrad bewirkte Übertragung der Wärme des Arbeitsmediums 17 auf die Spülflüssigkeit 24 sichergestellt.

Weiterhin ist der Wärmepumpe 14 zweckmäßigerweise eine elektrische Anschlussmöglichkeit 25 zugeordnet. Mittels der elektrischen Anschlussmöglichkeit 25 lässt sich insbesondere der elektrische Motor des Kompressors 16 zu dessen Betrieb und/oder die Luftfördereinrichtung 39 zu ihrem Betrieb mit elektrischer Energie versorgen. Zusätzlich kann die Wärmepumpenanordnung 14 neben der elektrischen Anschlussmöglichkeit 25 und der Anschlussmöglichkeit 22, 23 für die Spülflüssigkeit 24 ggf. verschiedene Sensoren und einen Anschluss 25' für eine Kommunikationsschnittstelle, insbesondere für einen Datenbus, umfassen. Der elektrische Anschluss 25 kann - wie in der Figur 2 exemplarisch gezeigt - insbesondere Teil eines ggf. auch noch ein oder mehrere Sensoren und den Kommunikationsschnittstellenanschluss 25', insbesondere Datenbusanschluss, umfassenden Elektro-/Kommunikations- Moduls 29 sein. Über den Kommunikationsschnittstellenanschluss 25' kann der Betrieb des elektrischen Antriebsmotors des Kompressors 16 sowie der Luftfördereinrichtung 26 kontrolliert, insbesondere gesteuert und/oder geregelt, werden. Dies ist in der Figur 2 durch strichpunktierte Doppelpfeil KV2 und KV3 veranschaulicht. Dieser Kommunikationsschnittstellenanschluss 25' kann vorzugsweise über ein oder mehrere Signalisierungsverbindungen, insbesondere über einen Datenbus, Kommunikationssignale von einer Kontrolleinheit CO empfangen und/oder an diese senden. Die Kontrolleinheit CO ist in der Figur 2 zusätzlich strichpunktiert eingezeichnet. Die Kommunikationsverbindung zwischen ihr und dem Kommunikationsschnittstellenanschluss 25' ist durch einen strichpunktierten Doppelpfeil KV1 symbolisiert. Mit Hilfe der Kontrolleinheit CO kann der Betrieb der Wärmepumpe 14, insbesondere deren Kompressors 16 und/oder deren Luftfördereinrichtung 26, beaufsichtigt werden. Dabei kann die Kontrolleinheit CO der Wärmepumpenanordnung 14 unmittelbar zugeordnet sein, insbesondere Bestandteil des Elektro- /Kommunikations-Moduls 29 sein, oder - wie in der Figur 2 angedeutet - abgesetzt von der Wärmepumpenanordnung 14 an einer anderen Stelle in der Haushaltsgeschirrspülmaschine 1, insbesondere in deren Basisträger 12, vorgesehen sein. Sie kann vorzugsweise Teilkomponente einer übergeordneten Steuer-/Kontrolleinrichtung SCO sein, mittels der sich die ein oder mehreren Teilspülphasen wie z.B. Vorspülen, Reinigen, Zwischenspülen, Klarspülen und die abschließende Trocknungsphase eines jeweilig durchzuführenden Geschirrspülprogramms automatisiert ausführen lassen. Dabei können die Kontrolleinheit CO und/oder die Steuer-/Kontrolleinrichtung SCO durch Hardware- und/oder Software- Komponenten realisiert sein.

Diese Wärmepumpe 14 kann - wie in Figur 2 gezeigt - insgesamt eine modulare (Installations-) Einheit ausbilden. Dazu können zumindest die wesentlichen, vom Arbeitsmedium 17 durchströmbaren Komponenten 16, 18, 19, 20, 21 der Wärmepumpe 14 sowie insbesondere auch die dem Verdampfer 20 vorgeordnete Luftfördereinrichtung 26, der für die Erwärmung von Spülflüssigkeit 24 vorgesehene Wärmeübertrager WT, und/oder das Elektro- /Kommunikations- Modul 29 an einer sie haltenden Trägereinheit 15 wie z.B. einer Trägerplatte oder einem Halterahmen oder Gestell mechanisch fest angeordnet sein, so dass eine modulare und einfach zu montierende Einheit gebildet ist. Die wesentlichen, vom Arbeitsmedium 17 durchströmbaren Funktionsbauteile 16, 18, 19, 20, 21 der Wärmepumpe 14 können vor Einbau in die Geschirrspülmaschine 1 an der Trägereinheit 15 vormontiert, mit Arbeitsmedium 17 befüllt und auf Funktion getestet sein. Insbesondere kann die Wärmepumpe 14 bereits vorab, d.h. vor ihrem Einbau in die Haushaltsgeschirrspülmaschine 1 - hier in den Basisträger 12 -, auf Dichtigkeit ihrer Arbeitsmedium 17 führenden Komponenten 16, 18, 19, 20, 21 geprüft sein. Insbesondere wenn die Luftfördereinrichtung 26, das Elektro- /Kommunikations- Modul 29, und/oder ein oder mehrere etwaig vorgesehene Sensoren wie z.B. Temperatur- und/oder Feuchtigkeitssensoren mit an der Trägereinheit 15 angebracht sind, kann es vorteilhaft sein, auch diese der Wärmepumpenanordnung 14 zugeordneten Komponenten bereits vorab auf Funktionstüchtigkeit zu überprüfen,

Während der ein oder mehreren Aufheizphasen für Spülflüssigkeit, welche mittels des Betriebs der Wärmepumpe durchgeführt wird oder werden, wird mittels der vor dem Verdampfer 20 angeordneten Luftfördereinrichtung 26 Umgebungsluft 32 von außerhalb der Haushaltsgeschirrspülmaschine 1 angesaugt, durch die Struktur des Verdampfers 20 zum Transfer von Wärme auf das Arbeitsmedium 17 geblasen, wodurch die die Struktur des Verdampfers 20 durchströmende Luft abgekühlt wird, und dann die durch Wärmeentzug des Verdampfers 20 abgekühlte Umgebungsluft 32' aus dem im Gerätekorpus 5 rückseitig vorgesehenen Luftauslass LA ausgeblasen, so dass mit ihr die nahe gelegene Gebäudewand 27 hinter der Haushaltsgeschirrspülmaschine 1 beaufschlagt wird. Insbesondere kann die aus dem Luftauslass LA während des Wärmepumpenbetriebs ausgeblasene Kaltluft 32' auf einem dem Luftauslass LA gegenüberliegenden Bereich der Gebäudewand 27 auftreffen. Dadurch wird insbesondere dort die Oberfläche der Gebäudewand 27 mit der ausgeblasenen, kalten Luft 32' abgekühlt; aber auch dort, wo die kalte Luft 32' sonst noch die Gebäudewand 27 überstreicht, wird letztere ebenfalls abgekühlt. Dadurch besteht die Gefahr, dass die Oberflächen dieser ein oder mehreren kalten Zonen bzw. Bereiche der Gebäudewand 27 feucht werden. Dazu könnte es insbesondere nach dem Ausschalten der Luftfördereinrichtung 26 am Ende des Wärmepumpenbetriebs kommen, wenn der von der Luftfördereinrichtung 26 zuvor während des Wärmepumpenbetriebs in den Spaltfreiraum 28 ausgeblasenen Kaltluft 32' aus wärmeren Bereichen des Spaltfreiraums 28 gegenüber der Kaltluft 32' wärmere und einen größeren Gehalt an Feuchtigkeit aufweisende Spaltraumluft und/oder von außerhalb des Spaltfreiraums 28 wärmere und einen größeren Gehalt an Feuchtigkeit aufweisende Umgebungsluft nachströmt. Aus der dann vor diesen ein oder mehreren Kaltzonen jeweilig stehenden Luft könnten durch deren Abkühlung an den ein oder mehreren Kaltzonen der Gehäusewand 27 Wassertröpfchen auskondensieren.

Um dies zu vermeiden, wird nach dem Ende der letzten mittels Wärmepumpenbetrieb durchgeführten Aufheizphase für Spülflüssigkeit, insbesondere nach dem Ende der Klarspülphase, des jeweilig durchzuführenden Geschirrspülprogramms mittels zumindest einer Luftfördereinrichtung eine Nachlaufphase, d.h. eine der zum Aufheizen von Spülflüssigkeit vorgesehenen Wärmepumpenbetriebsphase zeitlich nachgelagerte Belüftungsphase wie z.B. NP1 oder NP2 (siehe Figur 4) durchgeführt. Diese Nachlaufphase dient dazu, die rückseitige Gebäudewand 27, vor der die Haushaltsgeschirrspülmaschine 1 aufgestellt ist, mit (gegenüber der Kaltluft 32') vorzugsweise wärmerer Luft 32" zu beströmen bzw. eine Luftbewegung im Spaltfreiraum 28 hervorzurufen. Durch diese Luftbeströmung können die ein oder mehreren kalten Zonen bzw. Bereiche an der Gebäudewand 27 erwärmt und/oder dort etwaig schon vorhandene Feuchtigkeit bzw. schon vorhandenes Kondenswasser abgetrocknet werden.

Zu diesem Zweck ist es besonders günstig, wenn die Luftfördereinrichtung 26, die vor dem Verdampfer 20 angeordnet ist und für die jeweils mittels Wärmepumpenbetrieb durchgeführten Spülflüssigkeits- Aufheizphase, insbesondere für die letzte mittels der Wärmepumpe durchgeführten Aufheizphase wie z.B. AHK (siehe Figur 4) in Betrieb war, jetzt für die Nachlaufphase bzw. Belüftungsphase wie z.B. NP1 oder NP2 herangezogen wird, d.h. in Betrieb genommen wird. Es ist dann keine zusätzliche Luftfördereinrichtung für die Belüftungsphase nötig.

Hier im Ausführungsbeispiel saugt die Luftfördereinrichtung 26 von außerhalb des Gerätekorpus 5 der Haushaltsgeschirrspülmaschine 1 Umgebungsluft 32 in vorteilhafter Weise vorzugsweise entlang einem Ansaugweg im Basisträger 12 an, welcher an ein oder mehreren, dort vorhandenen, Abwärme bzw. Verlustwärme abgebende Komponenten der Haushaltsgeschirrspülmaschine 1 vorbeiführt. Eine solche Abwärme abgebende Komponente ist hier im Ausführungsbeispiel insbesondere der Kompressor 16, der vor der Luftfördereinrichtung 26 (in deren Luftförderrichtung betrachtet) angeordnet ist. Zusätzlich oder unabhängig hiervon können Abwärme abgebende Komponenten z.B. der Spülbehälterboden, der Pumpensumpf, die Umwälzpumpe, ... , eine ergänzend zum Aufheizen von Spülflüssigkeit mittels Wärmepumpe etwaig zusätzlich vorgesehene elektrische Flüssigkeitsheizung, die dann in der Nachlaufphase ebenfalls ausgeschaltet ist, die thermische Masse eines Standgewichts, der Verflüssiger der Wärmepumpe, deren Kompressor in der Nachlaufphase ausgeschaltet ist, usw.... sein. Auch kann in der Nachlaufphase noch Wärme an die von der laufenden Luftfördereinrichtung 26 angesaugten Luft 32 von ein oder mehreren Komponenten transferiert werden, welche auch im Nachlaufbetrieb noch eingeschaltet sind und thermische Energie, insbesondere Abwärme, abgeben, wie z.B. die Steuer-/Kontrolleinrichtung SCO für die Durchführung des jeweiligen Geschirrspülprogramms. Die vorerwärmte Luft 32, die von der Luftfördereinrichtung 26 während der Nachlaufphase angesaugt wird, weist insbesondere eine Temperatur höher als die Umgebungstemperatur außerhalb der Haushaltsgeschirrspülmaschine 1 auf.

Insbesondere kann es vorteilhaft sein, wenn wie hier im Ausführungsbeispiel die Luftfördereinrichtung 26 während der Nachlaufphase wie z.B. NP1 oder NP2 (siehe Figur 4) Luft 32 aus einem Hohlraum bzw. Vorerwärmungsraum, insbesondere Ansaugraum, im Gerätekorpus 5 zur Belüftung der Gebäudewand 27 bzw. des Spaltfreiraums 28 entnimmt, insbesondere ansaugt, in welchem die Luft 32 nach dem Ende der letzten mittels der Wärmepumpe durchgeführten Aufheizphase wie z.B. AHK für Spülflüssigkeit einige Zeit bis zum Start wie z.B. tLE1 oder tLE2 der Nachlaufphase wie z.B. NP1 oder NP2 verweilte und dadurch durch ein oder mehrere Abwärme abgebende Komponenten verbessert vorerwärmt wurde. Dabei ist dieser Hohlraum, insbesondere Ansaugraum, zweckmäßigerweise ein Teilabschnitt des Laufwegs bzw. Förderwegs, insbesondere Ansaugwegs, so dass die Luftfördereinrichtung 26 nach dem Start wie z.B. zum Zeitpunkt tLE1 oder tLE2 der Nachlaufphase wie z.B. NP1 oder NP2 während dieser Umgebungsluft 32 von außerhalb der Haushaltsgeschirrspülmaschine 1 in diesen Hohlraum, insbesondere Ansaugraum, des Gerätekorpus nachfördert, wo sie durch ein oder mehrere Abwärme abgebende Komponenten vorerwärmt wird. Der Vorerwärmungsraum kann sich wie hier im Ausführungsbeispiel (siehe insbesondere Figuren 2, 3) vorzugsweise im Basisträger bzw. Sockel 12 unterhalb des Spülbehälters 2 der Haushaltsgeschirrspülmaschine 1 vor der Luftfördereinrichtung 26 befinden und der Luftförderweg kann vorzugsweise durch diesen Vorerwärmungsraum im Inneren des Basisträgers 5 hindurchführen.

Da der Kompressor 16 bereits vor der Nachlaufphase wie z.B. NP1 oder NP2 ausgeschaltet worden ist und bleibt, und dadurch der Verdampfer 20 während der Nachlaufphase nicht weiter aktiv und daher weniger oder kaum die seine Struktur durchströmende, durch Abwärme vorerwärmte Luft 32 abkühlt, ist diese nach Verlassen der Haushaltsgeschirrspülmaschine 1 in vorteilhafter Weise noch so warm, dass sie die von ihr beströmte Gebäudewand 27 auf eine Temperatur vorzugsweise höher als die Taupunkttemperatur der, insbesondere nach dem Ende der Nachlaufphase, im Spaltraum 28 vorhandenen, Feuchtigkeit enthaltenden Luft erwärmen kann.

Wenn wie hier im Ausführungsbeispiel nach dem Ende tKA der letzten mittels der Wärmepumpe durchgeführten Aufheizphase AHK, insbesondere nach dem Ende der Klarspülphase KP, des jeweilig durchzuführenden Geschirrspülprogramms GP erst eine Wartezeit bzw. Pausenzeit wie z.B. P1 oder P2 bis zum Einschalten der Luftfördereinrichtung 26 für die Nachlaufphase wie z.B. NP1 oder NP2 verstreicht bzw. vergeht, so können vorteilhaft Kondenswassertröpfchen, die am Ende der letzten mittels der Wärmepumpe durchgeführten Aufheizphase AHK am Verdampfer 26 hängen, nach unten z.B. in eine Auffangschale abtropfen, die in den Figuren 2, 3 der zeichnerischen Einfachheit halber weggelassen ist. Durch diese Abtropfphase wird vermieden, dass nach dem Einschalten der Luftfördereinrichtung 26 für die Nachlaufphase wie z.B. NP1, NP2 die von dieser durch die Struktur des Verdampfers 26 zwangsgeförderte Luft 32 ungewollt viel Feuchtigkeit vom Verdampfer mitnimmt und zur Gebäudewand 27 bzw. in den Spaltfreiraum 28 transportiert. Somit kann unmittelbar mit dem Beginn der jeweiligen Nachlaufphase wie z.B. NP1 oder NP2 der Luftfördereinrichtung 26 bereits ausreichend vorerwärmte Umgebungsluft 32" aus dem an der Rückseite des Basisträgers vorgesehenen Luftauslass LA in den Spaltfreiraum 28 ausgeblasen bzw. auf die Gebäudewand 27 hinter der Haushaltsgeschirrspülmaschine 1 geblasen werden.

Dadurch, dass die zum Wärmepumpenbetrieb vorgesehene Luftfördereinrichtung 26 mit zeitlichem Abstand wie z.B. P1 oder P2 zur letzten, mittels der Wärmepumpe durchgeführten Aufheizphase wie z.B. AHK für Spülflüssigkeit eines jeweilig durchzuführenden Geschirrspülprogramms GP automatisiert zu einem Nachlaufbetrieb bzw. Belüftungsbetrieb einschaltbar ist, kann an den ein oder mehreren, durch den zeitlich vorausgehenden Wärmepumpenbetrieb kalt gewordenen Zonen bzw. Bereichen der Gebäudewand 27 etwaig vorhandene Feuchtigkeit von der sie beströmenden, vorerwärmten Luft 32'' auf- und mitgenommen werden. Die kalten Zonen bzw. Bereiche an der Oberfläche der Gebäudewand 27 werden durch die Beströmung mit der vorerwärmten Luft 32" während der Nachlaufphase erwärmt, insbesondere auf eine Temperatur, die höher als die Taupunkttemperatur der im Spaltfreiraum 28 vorhandenen Luft, insbesondere nach dem Ende der Nachlaufphase vorhandenen Luft, ist. Die im Spaltfreiraum 28 vorhandene Luft kann während der Nachlaufphase eine Mischluft aus der dort vorhandenen Spaltraumluft, der in den Spaltfreiraum 28 hineingeblasenen, vorerwärmten Umgebungsluft sowie der etwaig von außen in den Spaltfreiraum 28 nachströmenden Umgebungsluft 32 sein.

Durch die Wartezeit bzw. Pausenzeit wie z.B. P1 oder P2 bis zum Einschalten der Luftfördereinrichtung 26 für die jeweilige Nachlaufphase wie z.B. NP1, oder NP2 kann zudem ggf. erreicht werden, dass bereits während der Wartezeit bzw. Totzeit wie z.B. P1 oder P2 in den Raum 28 zwischen der Haushaltsgeschirrspülmaschine 1 und der hinter dieser vorhandenen Gebäudewand 27 Wärmeenergie bzw. Abwärme von der Haushaltsgeschirrspülmaschine 1 abgegeben wird. Damit kann dort bei abgeschalteter Wärmepumpe 14 (Kompressor 16 ist ausgeschaltet) vor Zuführung von Luft 32 durch die Luftfördereinrichtung 26, d.h. vor deren Einschalten in den Nachlaufbetrieb, bereits die Temperatur bis über den Taupunkt von Wasser angehoben sein, so dass bei dann im Nachlaufbetrieb erfolgender Luftzuleitung durch die Luftfördereinrichtung 26 die Gefahr von Kondensation und Schimmelbildung an der Gebäudewand 27 deutlich vermindert ist.

Zudem wird dadurch, dass die dem Verdampfer 20 vorausgeordnete Luftfördereinrichtung 26 in der Nachlaufphase wie z.B. NP1 oder NP2, während der der Kompressor 16 der Wärmepumpe 14 ausgeschaltet ist, vorerwärmte Luft 32 durch die Struktur des Verdampfers 20 fördert, insbesondere bläst, der Verdampfer 20 weitgehend abgetrocknet. Dadurch sinkt auch die Gefahr einer Korrosion des Verdampfers 20.

Mittels der Nachlaufphase wie z.B. NP1 oder NP2 der Luftfördereinrichtung 26 wird durch die von ihr in den Spaltfreiraum 28 eingeblasene, vorerwärmte Luft 32" eine Luftbewegung im Spaltfreiraum 28 zwischen der Rückseite des Gerätekorpus 5 der Haushaltsgeschirrspülmaschine 1 und der Gebäudewand 27, vor der die Haushaltsgeschirrspülmaschine 1 aufgestellt ist, bewirkt, was zu einem Aufwärmen kalter Bereiche an der Gebäudewand 27 und/oder Abtrocknen von dort etwaig vorhandenen feuchten Bereichen führt. Würde hingegen die Luft im Spaltraum 28 zwischen der Rückseite des Gerätekorpus 5 der Haushaltsgeschirrspülmaschine 1 und der Gebäudewand 27, vor der die Haushaltsgeschirrspülmaschine 1 aufgestellt ist, nach der letzten mittels Beteiligung der Wärmepumpe 14 durchgeführten Aufheizphase AHK, insbesondere nach dem Ende der Klarspülphase KP, des jeweilig durchzuführenden Geschirrspülprogramms GP stillstehen, so bestände die Gefahr von Feuchtigkeitsflecken und/oder gar Schimmelbildung.

Figur 4 zeigt ein Zeit-Temperatur-Diagramm, bei dem oben ein Verlauf TS der Innenraumtemperatur im Spülbehälter 2 der Haushaltsgeschirrspülmaschine 1 und weiter unten ein Verlauf TW der Temperatur an der Oberfläche der hinter der Haushaltsgeschirrspülmaschine 1 gelegenen Gebäudewand 27 während der Spülphase SP und der darauffolgenden Trocknungsphase TP eines jeweilig durchzuführenden Geschirrspülprogramms GP beispielhaft eingezeichnet sind. Entlang der Abszisse des Zeit-Temperatur- Diagramms ist dabei die Zeit t in Sekunden (abgekürzt: sec) und entlang dessen Ordinaten die Temperatur T in Grad Celsius (abgekürzt: °C) aufgetragen. Die Spülphase SP umfasst hier im Ausführungsbeispiel zeitlich aufeinanderfolgend vorzugsweise eine Vorspülphase VP, eine Reinigungsphase RP, eine Zwischenspülphase ZP und eine Klarspülphase KP. Während dieser spülflüssigkeitsführenden Teilspülphasen VP, RP, ZP und KP werden entsprechende Teilspülgänge eines Spülgangs vor dem während der Trocknungsphase TP stattfindenden Trocknungsgang des Geschirrspülprogramms GP umgesetzt. Mit dem Start des Geschirrspülprogramms GP zum Zeitpunkt tVE =0 sec beginnt die Vorspülphase VP. Für diese wird hier im Ausführungsbeispiel vorzugsweise Frischwasser, das in einem Speichertank bzw. Wärmetauschertank z.B. außen an einer Seitenwand des Spülbehälters 2 bevorratet ist und während seiner dortigen Verweildauer die Umgebungstemperatur RT von etwa 21 °C angenommen hat, in den Spülbehälter 2 eingebracht. Mit diesem Wasser werden die zu reinigenden Spülgutteile bis zum Ende des Vorspülphase VP durch ein oder mehrere Spülflüssigkeits- Beaufschlagungsvorrichtungen beaufschlagt. Die Temperatur TW der Gebäudewand 27 hinter der Haushaltsgeschirrspülmaschine 1 hat dabei etwa Raumtemperatur RT von etwa 21 °C. Nach dem Ende der Vorspülphase VP und dem ggf. zumindest teilweisen Abpumpen der Spülflüssigkeit aus der Haushaltsgeschirrspülmaschine 1 startet die Reinigungsphase RP zum Zeitpunkt tRE. Dabei wird dem Spülbehälter 2 bei Bedarf Frischwasser zugeführt, und dem im Spülbehälter dann vorhandenen Wasser Reinigungsmittel zugesetzt. Um diese Spülflüssigkeit während einer Aufheizphase AHR auf eine gewünschte Reinigungsendtemperatur SRT von hier etwa 45 °C aufzuheizen, wird die Wärmepumpe 14 mit Beginn der Reinigungsphase RP eingeschaltet und bis zum Zeitpunkt tHA betrieben, bei dem die gewünschte Reinigungsendtemperatur SRT der mit Reinigungsmittel versetzten Spülflüssigkeit erreicht wird. Danach wird die Wärmepumpe 14 deaktiviert, d.h. deren Kompressor 16 und deren Luftfördereinrichtung 26 werden ausgeschaltet. Die derart mittels der Wärmepumpe 14 aufgeheizte Spülflüssigkeit wird im Umwälzkreislauf der Haushaltsgeschirrspülmaschine 1 noch für eine Nachwaschphase NW bis zum Ende der Reinigungsphase RP umgewälzt und auf das zu spülende Spülgut mittels der ein oder mehreren Spülflüssigkeits- Beaufschlagungsvorrichtungen verteilt. Da in der Aufheizphase AHR während des Betriebs der Wärmepumpe 14 (Kompressor 16 läuft) der mittels der Luftfördereinrichtung 26 durch die Struktur des Verdampfers 20 geförderten Umgebungsluft Wärme entzogen wird, wird die Luft durch den Verdampfer 20 stark abgekühlt. Die aus dem rückseitigen Luftauslass LA der Haushaltsgeschirrspülmaschine 1 mittels der Luftfördereinrichtung 26 ausgeblasene Kaltluft 32' kann dabei zwischenzeitlich Temperaturen um die 0 °C oder wie hier im Ausführungsbeispiel unter 0 °C erreichen. Dementsprechend kühlt sich die von der Kaltluft 32' beströmte, hinter der Haushaltsgeschirrspülmaschine 1 angeordnete Gebäudewand 27 ab. Mit Fortschreiten der Aufheizphase AHR steigt die Wandtemperatur TW um wenige Grad Celsius - hier bis auf etwa 4 °C - zu ihrem Ende hin an, da dann die von der Luftfördereinrichtung 26 angesaugte Luft 32 durch ein oder mehrere dann Abwärme abgebende Komponenten wie z.B. dem Kompressor 16 etwas vorerwärmt wird. Da die Wärmepumpe 14, insbesondere deren Kompressor 16, in der Nachwaschphase NW ausgeschaltet ist, erwärmt sich die von der Luftfördereinrichtung 26 angesaugte Luft durch die Abwärme abgebende Komponenten weiter - hier bis auf etwa 10 °C am Ende der Reinigungsphase RP zum Zeitpunkt tRA. Nach Abpumpen der mit Reinigungsmittel und mitt durch von den Spülgutteilen abgelösten Schmutzteilchen bzw. Verunreinigungen versetzten Spülflüssigkeit wird ab dem Zeitpunkt tZE eine unbeheizte Zwischenspülphase ZP durchgeführt, d.h. der Kompressor 16 der Wärmepumpe 14 bleibt aus. In der Zwischenspülphase ZP werden die Spülgutteile vorzugsweise mit in den Umwälzkreislauf, insbesondere in den Spülbehälter 2, der Haushaltsgeschirrspülmaschine 1 neu eingebrachtem Frischwasser beaufschlagt und etwaige Schmutz- und/oder Reinigerreste von den Spülgutteilen abgewaschen. Am Ende der Zwischenspülphase ZP wird die Spülflüssigkeit zweckmäßigerweise teilweise oder ganz aus dem Spülbehälter 2 abgepumpt. Es folgt zum Zeitpunkt tKE die spülgangabschließende Klarspülphase KP, für die mit Klarspülmittel versetztes Wasser, insbesondere Frischwasser, auf die Spülgutteile mittels der ein oder mehreren Spülflüssigkeits- Beaufschlagungsvorrichtungen aufgebracht wird. Dabei wird die Klarspülflüssigkeit, d.h. mit Klarspülmittel versetztes Wasser, vom Start der Klarspülphase KP zum Zeitpunkt tKA bis zum Ende der Klarspülphase KP zum Zeitpunkt tKA mittels der Wärmepumpe 14 auf eine gewünschte Soll- Endtemperatur SKT - wie hier z.B. von etwa 42 °C - aufgeheizt. Nach dem Ende der Klarspülphase KP bzw. nach dem Ende der letzten mittels der Wärmepumpe 14 durchgeführten Aufheizphase AHK zum Zeitpunkt tKA wird die Wärmepumpe 14 ausgeschaltet, d.h. ihr Kompressor 16 sowie ihre Luftfördereinrichtung 26 werden jeweils gestoppt bzw. ausgeschaltet. Da die Gebäudewand 27 während der Klarspülphase KP mit Kaltluft 32' aus dem Verdampfer 20 beströmt wird, kühlt sie wieder ab, hier im Ausführungsbeispiel bis auf eine Temperatur von etwa 2 °C am Ende der Klarspülphase KP zum Zeitpunkt tKA. Nach dem möglichst vollständigen Abpumpen der Spülflüssigkeit aus dem Spülbehälter 2 am Ende der Klarspülphase KP bzw. dem Ausschalten der Wärmepumpe 14 zum Zeitpunkt tKA schließt sich die Trocknungsphase TP zum Zeitpunkt tTE= tKA an. Diese endet - hier im Ausführungsbeispiel z.B. nach etwa 1 h (Stunde) - zum Zeitpunkt tTA. Dabei steigt hier im Ausführungsbeispiel die Wandtemperatur WT nur langsam von etwa 2 °C bis auf etwa 17 °C an. Dieser flache Verlauf der Wandtemperatur WT ist in der Figur 4 strichpunktiert eingezeichnet und mit TW0 bezeichnet. Da sich die Wandtemperatur WT der durch den zeitlich vorausgehenden Wärmepumpenbetrieb mit Kaltluft 32' beströmten Bereiche der Gebäudewand 27 während der Trocknungsphase TP ab deren Beginn bei tTE lange Zeit bzw. größtenteils unterhalb oder in der Nähe der Taupunkttemperatur - hier z.B. von etwa 14 °C befindet, können diese kalten Bereiche bzw. Zonen der Gebäudewand 27 feucht werden und es steigt dort die Gefahr von Schimmelbildung. Im Ausführungsbeispiel von Figur 4 erwärmt sich die Gebäudewand 27 nach etwa 0,5 h, d.h. nach einer halben Stunde, ab dem Ausschaltzeitpunkt tKA der Wärmepumpe 14 erst auf eine Wandtemperatur von etwa 14° C, nach 1 h erst auf 17° C. Um an der Gebäudewand eine Feuchte- und/oder Schimmelgefahr zu vermeiden, wird nach dem Ende der Klarspülphase KP nach Abwarten einer Abtropfphase wie z.B. P1, hier im Ausführungsbeispiel von etwa 3 bis 5 Minuten, in der Kondenswasser vom Verdampfer 20 abtropfen kann, nun die Luftfördereinrichtung 26 eingeschaltet und ab dem Zeitpunkt wie z.B. tLE1 > tKA für eine Nachlaufphase wie z.B. NP1 der Zeitdauer NZ1 - hier vorzugsweise bis zum Ende der Trocknungsphase TP - betrieben. Da mit Hilfe der Luftfördereinrichtung 26 Luft angesaugt wird, die auf ihrem Ansaugweg durch ein oder mehrere Abwärme abgebende Komponenten wie z.B. dem Kompressor 16 in günstiger Weise auf eine Temperatur höher als die Umgebungstemperatur RT vorerwärmt wird, und diese vorerwärmte Luft 32'' nach Durchströmen der Struktur des deaktivierten Verdampfers 20 (Kompressor 16 ist ausgeschaltet) ohne größeren Wärmeverlust auf die Gebäudewand 27 geblasen wird, kann die Temperatur an deren luftbeströmten Oberfläche viel früher und schneller (als im Fall ohne Nachlaufphase der Luftfördereinrichtung 26) auf ein Niveau gebracht werden, das höher als die Taupunkttemperatur im Spaltfreiraum 28 ist. Hier im Ausführungsbeispiel von Figur 4 ist dieser Anstieg der Wandtemperatur WT durch eine durchgezogene Kurve TW1 veranschaulicht, die deutlich steiler als die Kurve TW0 verläuft, die sich für den Fall ohne Nachlaufbetrieb der Luftfördereinrichtung 26 ergibt. Während die Wandtemperatur im Fall ohne Nachlaufphase (strichpunktierte Kurve TW0) erst nach 0,5 h (Stunden) die Taupunkttemperatur von hier etwa 14 °C erreicht, wird diese mit der Nachlaufphase NP1 schon viel früher - hier bei etwa 0,15 h (Stunden) - erreicht und dann überschritten. Die Wandtemperatur WT steigt bis zum Ende der Nachlaufphase NP1 entsprechend der TW1 hier bis auf 24 °C mit einem deutlichen Sicherheitsabstand über die Taupunkttemperatur an, so dass die Oberfläche der Gebäudewand 27 in zuverlässiger Weise abgetrocknet und/oder trocken gehalten werden kann. In der Figur 4 ist zusätzlich eine zweite Nachlaufphase NP2 der Luftfördereinrichtung 26 eingezeichnet, die mit einem größeren zeitlichen Abstand P2 (> P1), hier im Ausführungsbeispiel z.B. von etwa 20 min (Minuten), zum Zeitpunkt tLE2 > tLE1 beginnt und für eine Zeitdauer NZ2 < NZ1 bis zum Ende der Trocknungsphase TP dauert. Auch hier steigt die Wandtemperatur WT entsprechend der Kurve TW2 an der Oberfläche der Gebäudewand 27, die mittels der Luftfördereinrichtung 26 mit der vorerwärmten Luft 32'' beströmt wird, früher und schneller (im Vergleich zum Verlauf TWO der Wandtemperatur WT im Fall ohne Nachlaufphase der Luftfördereinrichtung 26) auf ein Temperaturniveau oberhalb der Taupunkttemperatur von hier etwa 14° C an und erreicht hier im Ausführungsbeispiel zum Ende der Nachlaufphase NP2 ungefähr 24 °C.

In Verallgemeinerung ist zumindest eine, insbesondere die dem Verdampfer für den Wärmepumpenbetrieb zugeordnete, Luftfördereinrichtung (auch mehrere Luftfördereinrichtungen neben- oder übereinander sind möglich)vorzugsweise mit zeitlichem Abstand zum Ende der letzten mittels der Wärmepumpe durchgeführten Aufheizphase für Spülflüssigkeit, die zur Reinigung von Geschirr, Gläsern oder ähnlichem Spülgut auf diese aufbringbar ist, automatisiert zu einem Nachlaufbetrieb einschaltbar. Die letzte, mittels der Wärmepumpe durchgeführte Aufheizphase für Spülflüssigkeit findet insbesondere während der Klarspülphase des jeweilig durchzuführenden Geschirrspülprogramms statt, während der Klarspülflüssigkeit, d.h. mit Klarspülmittel versetztes Wasser, mittels einer Umwälzpumpe im Umwälzkreislauf der Haushaltsgeschirrspülmaschine umgewälzt und auf das Spülgut im Spülbehälter aufgebracht wird. Dabei ist die Klarspülphase vorzugsweise die letzte Teilspülphase des jeweiligen Geschirrspülprogramms, bei der das Spülgut mit Spülflüssigkeit abgespült wird. Die letzte, mittels der Wärmepumpe durchgeführte Aufheizphase für Spülflüssigkeit beginnt vorzugsweise mit dem Start der Klarspülphase und endet vorzugsweise mit dem Ende der Klarspülphase des Geschirrspülprogramms und damit mit dem Ende des von diesem bewirkten, eigentlichen Spülgangs, während dem das zu reinigende Spülgut mit Spülflüssigkeit beaufschlagt und nass wird. Diesem folgt insbesondere ein Trocknungsgang zur Trocknung des Spülguts während der abschließenden Trocknungsphase des Geschirrspülprogramms nach. Zusätzlich kann der Trocknungsphase auch noch eine Aufbewahrungsphase nachfolgen, während der das zuvor sauber gespülte und dann getrocknete Spülgut im Spülbehälter verbleibt.

Der Nachlaufbetrieb bzw. Belüftungsbetrieb wird vorzugsweise außerhalb des eigentlichen Spülgangs durchgeführt. Insbesondere findet der Nachlaufbetrieb während der Trocknungsphase des Geschirrspülprogramms, während der das zuvor nass gespülte Spülgut im Spülbehälter getrocknet wird, und/oder in einer der Trocknungsphase nachfolgenden Aufbewahrungsphase (sogenannte "storage function phase") statt, während der das gespülte und getrocknete Spülgut im Spülbehälter aufbewahrt wird. Es ist aber auch möglich, dass im Nachlaufbetrieb das Spülgut aus dem Spülbehälter bereits ausgeräumt ist. Im Nachlaufbetrieb wird Luft wie z.B. 32, insbesondere durch Abwärme der Haushaltsgeschirrspülmaschine vorerwärmte Luft wie z.B. 32", auf die zuvor während des Wärmepumpenbetriebs abgekühlte Gebäudewand und/oder Küchenmöbelwand, die hinter und/oder neben der Haushaltsgeschirrspülmaschine vorhanden ist, gefördert. Dieser Nachlaufbetrieb ist ohne Betrieb der Wärmepumpe möglich und sinnvoll, da dann die Gefahr verringert ist oder der Gefahr zumindest nahezu aus dem Weg gegangen wird, dass Luft, die mittels der für den Nachlaufbetrieb verwendeten Luftfördereinrichtung durch die Wand, insbesondere Rückwand, des Gerätekorpus der Haushaltsgeschirrspülmaschine zur Gebäudewand und/oder Küchenmöbelwand gefördert wird, am Verdampfer gekühlt oder mit Flüssigkeit bzw. Feuchtigkeit befrachtet wird.

Wenn die Luftfördereinrichtung mit einem zeitlichen Abstand von zumindest 3 Minuten, insbesondere von 3 bis 5 Minuten, nach dem Ende des eigentlichen Spülgangs des jeweiligen Geschirrspülprogramms einschaltbar ist, ist schon ein großer Teil des am Verdampfer kondensierten Wassers nach unten, insbesondere in eine unter dem Verdampfer befindliche Kondensatwanne oder ähnliches, abgetropft.

Ggf., d.h. unter manchen praktischen Gegebenheiten, kann es zweckmäßig sein, wenn die Luftfördereinrichtung mit einem gegenüber dieser Abtropfphase (siehe z.B. P1 in der Figur 4) größeren zeitlichen Abstand (siehe z.B. P2 in der Figur 4) - wie z.B. mit einem zeitlichen Abstand von zumindest 20 Minuten - nach dem Ende der letzten mittels der Wärmepumpe durchgeführten Aufheizphase für Spülflüssigkeit, insbesondere der Klarspülphase, einschaltbar ist. Dann kann insbesondere der Wärmepumpe selbst auch genug Zeit gegeben sein, um am Verdampfer zusätzlich zum Abtropfen von Kondenswasser ein hinreichendes Aufwärmen des Verdampfers zu ermöglichen. Dadurch lässt sich die Gefahr verringern oder ggf. zumindest nahezu ganz vermeiden, dass die mittels der für den Nachlaufbetrieb verwendeten Luftfördereinrichtung zur Gebäudewand und/oder Küchenmöbelwand geförderte Luft beim Durchströmen der Struktur des Verdampfers durch diesen gekühlt und/oder mit Flüssigkeit bzw. Feuchtigkeit befrachtet wird.

Insbesondere kann der zeitliche Abstand zu diesem letzten Abschalten der Wärmepumpe 14, also zum Zeitpunkt tKA, ab dem die Temperatur der Teile der Wärmepumpe 14, insbesondere des Verdampfers 20, sich an die Temperatur der außerhalb der Haushaltsgeschirrspülmaschine vorhandenen Umgebungsluft 32 langsam angleicht, zumindest 40 Minuten betragen, ehe die Luftfördereinrichtung 26 für den Nachlaufbetrieb einschaltbar ist. Dadurch lässt sich die Gefahr nochmals verringern oder ggf. zumindest nahezu ganz vermeiden, dass die mittels der für den Nachlaufbetrieb verwendeten Luftfördereinrichtung zur Gebäudewand und/oder Küchenmöbelwand geförderte Luft beim Durchströmen der Struktur des Verdampfers durch diesen gekühlt und/oder mit Flüssigkeit bzw. Feuchtigkeit befrachtet wird. Vom Ausschaltzeitpunkt der Wärmepumpe bis zum Einschalten der für den Nachlaufbetrieb vorgesehenen Luftfördereinrichtung kann somit die Trocknung und Erwärmung von Gebäudewand und/oder Küchenmöbelwand und/oder des Verdampfers der Wärmepumpe durch Abwärme der Haushaltsgeschirrspülmaschine weitgehend unbeeinträchtigt fortschreiten.

Die bereits in ihrer Funktion für den Nachlaufbetrieb skizzierte Luftfördereinrichtung 26 muss nicht als gesonderte Baueinheit vorgesehen werden, sondern kann dem zumindest einen Verdampfer 20 zugeordnet sein und damit dessen Hauptfunktion beim Betrieb der Wärmepumpe 14 erfüllen. Dann ist die Luftfördereinrichtung 26 dafür geeignet, Luft 32 des umgebenden Raums durch die Struktur des Verdampfers 20 hindurch - hier im Ausführungsbeispiel vorzugsweise in einen von der Vorderseite V der Geschirrspülmaschine 1 diametral abgewandten Bereich 28 hinter der Rückwand R und/oder neben eine oder zwei Seitenwände S der Geschirrspülmaschine 1 zu fördern. In Figur 3 ist nur die Förderung der Luft 32 hinter die Rückwand R der Geschirrspülmaschine 1 gezeichnet.

Hierfür kann die Luftfördereinrichtung 26 insbesondere ein um eine in Betriebsstellung der Haushaltsgeschirrspülmaschine 1 horizontale oder zumindest nahezu horizontale Achse rotierbares Förderrad 30 umfassen, das die Umgebungsluft 32 durch Schlitze oder Öffnungen im Gerätekorpus 5, insbesondere durch die Lüftungsschlitze 31 an der Vorderseite V, einzieht und nach hinten durch die Rückwand R in Richtung der Gebäudewand 27 leitet. Auch andere Luftfördereinrichtungen 26 sind natürlich möglich.

Mit dem beschriebenen Luftweg kann die Luftfördereinrichtung 26 relativ warme und trockene Luft 32 aus der Umgebung gegen eine in Betriebsstellung hinter der Geschirrspülmaschine 1 befindliche Gebäudewand 27 fördern, und so dort eine Verdrängung nach dem Einsatz der Wärmepumpe feuchten und kalten Luft bewirken. Der Gefahr von Schimmel und Stockflecken wird damit sehr effektiv entgegengewirkt.

Eine besonders nachhaltige Erwärmung der Gebäudewand 27 und des Bereichs 28 vor der Gebäudewand 27 lässt sich erreichen, wenn die eingeschaltete Betriebszeit der Luftfördereinrichtung 26 im Nachlaufbetrieb bei mehr als 30 Minuten liegt. Aber selbst wenn dies abgebrochen wird, weil zum Beispiel ein neuer Spülgang beginnen soll, ist der Effekt zur Schimmelvermeidung erheblich.

Insbesondere liegt die eingeschaltete Betriebszeit der Luftfördereinrichtung 26 im beschriebenen Nachlaufbetrieb bei mehr als 45 Minuten.

Für eine maximale Energieeffizienz liegt die eingeschaltete Betriebszeit der Luftfördereinrichtung 26 im Nachlaufbetrieb bei maximal 90 Minuten ohne Unterbrechung, da nach dieser Zeit keine weitere Erwärmung durch die Umgebungsluft 32 zu erwarten ist.

Zur Energieeffizienz trägt auch bei, wenn die Förderleistung der Luftfördereinrichtung 26 im Nachlaufbetrieb gegenüber der Förderleistung der Luftfördereinrichtung 26 bei eingeschalteter Wärmepumpe 14 abgesenkt ist.

Für die Einschaltzeit und/oder die Dauer des Nachlaufbetriebs sind unterschiedliche Modelle möglich:
In der einfachsten Variante kann der zeitliche Abstand nach tKA bis zum Einschalten der Luftfördereinrichtung 26 fest voreingestellt sein.

Eine weitere Möglichkeit sieht vor, dass der zeitliche Abstand bis zum Einschalten der Luftfördereinrichtung 26 für den Nachlaufbetrieb und/oder die Dauer des Nachlaufbetriebs abhängig ist von einer Umgebungstemperatur im Raum. Diese Temperatur kann zum Beispiel von einem ohnehin vorhandenen Temperatursensor an der in den Umwälzkreislauf der Haushaltsgeschirrspülmaschine eingefügten Heizpumpe (hier nicht eingezeichnet) vor oder während des Spülgangs erfasst werden. Darauf wird dann die entsprechende Zeit als Abstand zu tKA gewählt, wobei insbesondere die Faustregel gilt: Je größer die Temperatur der Umgebungsluft 32 ist, desto kürzer kann der zeitliche Abstand bis zum Einschalten des Nachlaufbetriebs und/oder desto kürzer kann die Dauer des Nachlaufbetriebs sein.

Eine dritte Möglichkeit sieht vor, dass der zeitliche Abstand bis zum Einschalten der Luftfördereinrichtung 26 für den Nachlaufbetrieb und/oder die Dauer des Nachlaufbetriebs abhängig ist von einer am Verdampfer 20 und/oder in der Nähe von diesem im Bereich der Rückwand R gemessenen Temperatur. Diese Temperatur kann vorzugsweise zeitlich getaktet erfasst werden, so dass ihr Verlauf bestimmt werden kann. Sie kann daher gut als Eingangsparameter für eine Regelung des Nachlaufbetriebs dienen, bei der insbesondere auch ein passender Ausschaltzeitpunkt für den Nachlaufbetrieb anhand einer hinreichend hohen gemessenen Temperatur bestimmt werden kann. Zusätzlich oder unabhängig zu einem Temperatursensor kann auch ein Sensor für die Luftfeuchtigkeit im Bereich von Verdampfer 20 und/oder Rückwand R vorgesehen sein. Dieser Sensor könnte auch in den Raum 28 zwischen Rückwand R oder Seitenwand S und Gebäudewand 27 ragen.

Ggf. kann es zweckmäßig sein, wenn der zeitliche Abstand bis zum Einschalten der Luftfördereinrichtung 26 für den Nachlaufbetrieb derart bemessen ist, dass die Gebäudewand 27 bis zu einer Temperatur oberhalb des Taupunkts für Wasser aufgewärmt ist. Ansonsten könnte sich ein negativer Effekt durch Zuführung von zunächst relativ feuchter Luft auf die Gebäudewand 27 ergeben, was in jedem Fall vermieden werden soll. Diese würde sonst auf die Gebäudewand 27 prallen und dort einer Schimmelbildung eher Vorschub leisten, als zu helfen, diese in jedem Fall zu vermeiden. Relative feuchte Luft könnte insbesondere dann entstehen, wenn die Luftfördereinrichtung 26 Umgebungsluft 32 durch die Struktur des Verdampfers 20 fördert, wenn dieser nach dem Ausschalten der Wärmepumpe 14 noch zu nass und/oder zu bereift ist.

Für diesen Temperaturanstieg der seitlich und/oder hinter der Rückwand R befindlichen Gebäudewand 27 wird keine Extra-Heizung benötigt, sondern in der Zeit nach dem Spülgang, insbesondere Klarspülgang KP, bis zum Einschalten der Luftfördereinrichtung 26 für den Nachlaufbetrieb ist eine hinter und/oder neben der Geschirrspülmaschine 1 stehende Gebäudewand 27 durch Abwärme der Geschirrspülmaschine 1 aufwärmbar. Dieser Temperaturanstieg ist im rechten Bereich (rechts vom Zeitpunkt tKA) in Figur 4 erkennbar.

Die beschriebene Geschirrspülmaschine 1 wird so betrieben, dass nach Abschalten der Wärmepumpe 14 zum Zeitpunkt tKA die Luftfördereinrichtung 26 mit zeitlichem Abstand hierzu und mit zeitlichem Abstand zu einem Ende eines Spülgangs zur Reinigung von Geschirr, Gläsern oder ähnlichem Spülgut automatisiert, also ohne notwendiges Zutun eines Benutzers, zu einem Nachlaufbetrieb eingeschaltet wird.

Die Luftfördereinrichtung 26 wird also zumindest im Nachlaufbetrieb außerhalb des Spülgangs und ohne Betrieb der Wärmepumpe 14 eingeschaltet und betrieben. Dieser Prozess kann automatisch vor Starten des Nachlaufbetriebs oder auch während des Nachlaufbetriebs abbrechen, wenn vom Benutzer ein neuer Spülgang gestartet wird.

In Figur 4 wird anhand der Temperaturverläufe TW1, TW2 bei Nutzung des Nachlaufbetriebs deutlich, dass der Nachlaufbetrieb sowohl die an der Gebäudewand 27 hinter der Geschirrspülmaschine 1 erreichte Endtemperatur deutlich erhöht als eine Beschleunigung des Temperaturanstiegs hinter der Geschirrspülmaschine nach Ende des Einsatzes der Wärmepumpe 14 bewirkt. Der Nachlaufbetrieb bringt daher zwei positive Effekte zum Schutz der Umgebung hinter und/oder neben der Geschirrspülmaschine 1 mit sich.

Wie oben beschrieben, schaltet die Luftfördereinrichtung 26 für den Nachlaufbetrieb mit einem zeitlichen Abstand von zumindest 3 Minuten nach Ende des Spülgangs ein, wobei die Einschaltzeit fest eingestellt sein kann, oder abhängig von einer gemessenen Temperatur der Umgebungsluft im Raum sein kann und/oder abhängig von einer oder insbesondere mehreren nach Ende des Spülgangs im Nahbereich der Gebäudewand 27 gemessenen Temperaturen sein kann. Im letztgenannten Fall kann sich eine echte Regelung des Nachlaufbetriebs ergeben. In allen Fällen kann ein Programm für das Einschalten und den Nachlaufbetrieb in einem Steuergerät CO der Wärmepumpe 14 oder in einem Steuergerät SCO der Haushaltsgeschirrspülmaschine 1 hardware- und/oder insbesondere softwareseitig implementiert sein.

In Abwandlung zu dem obigen Fall, gemäß dem eine Abtropfphase wie z.B. P1 oder P2 zwischen dem Ende der Klarspülphase KP bzw. dem letzten mittels der Wärmepumpe 14 durchgeführten Aufheizvorgang für Spülflüssigkeit und dem Beginn des mittels der Luftfördereinrichtung 26 durchgeführten Nachlaufbetriebs bzw. Belüftungsbetriebs wie z.B. NP1 oder NP2 liegt, ist es ggf. sogar möglich, dass die Luftfördereinrichtung 26 nach dem Ende der Klarspülphase KP bzw. nach dem Endzeitpunkt des letzten mittels der Wärmepumpe 14 durchgeführten Aufheizvorgangs für Spülflüssigkeit, ab dem der Kompressor 16 ausgeschaltet wird und bleibt, für eine Nachlaufzeitdauer wie z.B. bis zum Ende der Trocknungsphase TP einfach weiterläuft, d.h. ihren Betrieb fortsetzt. Die Wartezeit, insbesondere Abtropfzeit, wie z.B. P1 oder P2 entfällt dann. Ein etwaiger Eintrag von Feuchtigkeit von zu Beginn des Nachlaufbetriebs noch feuchten und/oder bereiften Teilen des Verdampfers 20 in die diesen beströmende Luft kann bei der anschließenden Belüftung der Gebäudewand 27 durch diese Luft dennoch unkritisch sein, insbesondere wenn das Kondenswasser vom Verdampfer zügig bzw. in kurzer Zeit abtropft und/oder die Temperatur der ausgeblasenen, vorerwärmten Luft 32" ausreichend, d.h. weit genug oberhalb der Taupunkttemperatur im Bereich der und/oder an der Gebäudewand 27 liegt.

Die Wärmepumpe 14 kann wie weiter oben bereits ausgeführt vor Einbau in die Geschirrspülmaschine vormontiert, mit Arbeitsmittel 17 befüllt und auf Dichtigkeit getestet sein. Dabei kann die Wärmepumpe 14 zumindest mit ihren wesentlichen Komponenten 16, 18, 19, 20, 21 und der Luftfördereinrichtung 26 an einer sie haltenden Trägereinheit 15 mechanisch fest angeordnet sein, so dass eine modulare Einheit gebildet ist.

Eventuelle Temperatur- und/oder Feuchtigkeitssensoren können mit Bestandteil dieses Moduls sein und daher in ihrer Funktion für den Nachlaufbetrieb vor Einbau in die Geschirrspülmaschine 1, insbesondere in den räumlich sehr begrenzten und daher für die Montage problematischen Sockel 12, vormontiert und auf Funktion - auch des Nachlaufbetriebs - unter verschiedenen Bedingungen, zum Beispiel auch unter verschiedenen Umgebungstemperaturen, getestet sein.

Ggf. kann die Luftfördereinrichtung für die Nachlaufphase bzw. Belüftungsphase auch durch zumindest eine schon vorhandene Luftfördereinrichtung gebildet sein, die für eine andere Funktion als die Luftfördereinrichtung 26, die dem Verdampfer 20 zum Beströmen und/oder Durchströmen mit Umgebungsluft während der jeweiligen mittels Wärmepumpenbetrieb durchzuführenden Spülflüssigkeits- Aufheizphase zugeordnet ist, in und/oder an der Haushaltsgeschirrspülmaschine 1 vorgesehen ist. Eine solche zweite, bereits vorhandene Luftfördereinrichtung ist vorzugsweise nicht vor dem Verdampfer 20, sondern an einer davon verschiedenen Stelle der Haushaltsgeschirrspülmaschine 1 angeordnet. In der Figur 2 ist eine zweite Luftfördereinrichtung beispielhaft an der Rückwand R der Haushaltsgeschirrspülmaschine lediglich schematisch sowie strichpunktiert angedeutet und mit 26' bezeichnet. Sie sorgt für eine Belüftung des Spaltfreiraums 28 während der Nachlaufphase bzw. Belüftungsphase alleine oder ggf. auch in Kombination mit der vor dem Verdampfer 20 angeordneten Luftfördereinrichtung 26. Insbesondere lässt sich mit ihrer Hilfe während der Belüftungsphase Umgebungsluft, die durch ein oder mehrere Abwärme abgebende Komponenten der Haushaltsgeschirrspülmaschine vorerwärmt ist und/oder wird, in den Spaltfreiraum 28 und/oder auf die ein oder mehreren kalten Zonen bzw. Bereiche der Gebäudewand 27 fördern, insbesondere blasen.

Nach einer weiteren Alternative kann aber auch zumindest eine eigens bzw. extra für den Belüftungsbetrieb vorgesehene Luftfördereinrichtung wie z.B. 26" zusätzlich zu der für den Wärmepumpenbetrieb vor dem Verdampfer 20 vorgesehenen Luftfördereinrichtung 26, insbesondere an einer anderen Stelle als diese, zweckmäßig sein. Sie sorgt für eine Belüftung des Spaltfreiraums 28 während der Nachlaufphase bzw. Belüftungsphase alleine oder ggf. auch in Kombination mit der vor dem Verdampfer 20 angeordneten Luftfördereinrichtung 26. Insbesondere ermöglicht sie es, während der Belüftungsphase Umgebungsluft, die durch ein oder mehrere Abwärme abgebende Komponenten der Haushaltsgeschirrspülmaschine vorerwärmt ist und/oder wird, in den Spaltfreiraum 28 und/oder auf die ein oder mehreren kalten Zonen bzw. Bereiche der Gebäudewand 27 zu fördern, insbesondere zu blasen.

## Patentansprüche

1. Geschirrspülmaschine (1), insbesondere Haushaltsgeschirrspülmaschine, mit zumindest einer Wärmepumpe (14), die zumindest einen Kompressor (16), einen Verflüssiger (18), ein Expansionsorgan (19) und einen Verdampfer (20) umfasst, die untereinander über Leitungsbereiche (21) zur Weiterleitung eines im Betrieb den Aggregatzustand wechselnden Arbeitsmediums (17) verbunden sind, wobei der Wärmepumpe (14) zumindest eine Zuleitung (22) und eine Ableitung (23) von in der Geschirrspülmaschine (1) zirkulierbarer Spülflüssigkeit (24) zugeordnet sind, und wobei zumindest eine Luftfördereinrichtung (26) vorgesehen ist,
**dadurch gekennzeichnet,**
**dass** die Luftfördereinrichtung (26) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), zumindest eines durchzuführenden Geschirrspülprogramms (GP), während dem in ein oder mehreren Teilspülphasen (RP, KP) die zum Reinigen von Geschirr, Gläsern oder ähnlichem Spülgut jeweilig verwendete Spülflüssigkeit (24) in zumindest einer Aufheizphase (AHR, AHK) mittels der Wärmepumpe (14) erwärmbar ist, für eine Nachlaufzeitdauer (NZ1, NZ2) betreibbar ist.

2. Geschirrspülmaschine (1) nach Anspruch 1,
**dadurch gekennzeichnet,**
**dass** die Luftfördereinrichtung (26) dem Verdampfer (20) der Wärmepumpe (14) zugeordnet ist, und dass diese Luftfördereinrichtung (26) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), des jeweilig durchzuführenden Geschirrspülprogramms (GP), für eine Nachlaufzeitdauer (NZ1, NZ2), insbesondere während der Trocknungsphase (TP) des jeweilig durchzuführenden Geschirrspülprogramms (GP), weiterläuft.

3. Geschirrspülmaschine (1) nach Anspruch 1,
**dadurch gekennzeichnet,**
**dass** die Luftfördereinrichtung (26) dem Verdampfer (20) der Wärmepumpe (14) zugeordnet ist, und dass diese Luftfördereinrichtung (26) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), des jeweilig durchzuführenden Geschirrspülprogramms (GP) mit zeitlichem Abstand (P1, P2) zu diesem Ende (tKA), insbesondere in der Trocknungsphase (TP) des Geschirrspülprogramms (GP), automatisiert einschaltbar und für eine Nachlaufzeitdauer (NZ1, NZ2), insbesondere bis zum Ende (tTA) der Trocknungsphase (TP) des Geschirrspülprogramms (GP), betreibbar ist.

4. Geschirrspülmaschine (1) nach Anspruch 3,
**dadurch gekennzeichnet,**
**dass** die Luftfördereinrichtung (26) mit einem zeitlichen Abstand (P1) von zumindest 3 Minuten nach dem Ende der letzten mittels der Wärmepumpe (14) durchgeführten Aufheizphase (AHK) für Spülflüssigkeit (24), insbesondere nach dem Ende (tKA) der Klarspülphase (KP), des jeweilig durchzuführenden Geschirrspülprogramms (GP) einschaltbar ist.

5. Geschirrspülmaschine (1) nach zumindest einem der Ansprüche 1 bis 4,
**dadurch gekennzeichnet,**
**dass** die Luftfördereinrichtung (26) dem Verdampfer (20) zugeordnet ist und dafür geeignet ist, Luft (32) aus der Umgebung am Aufstellort der Geschirrspülmaschine (1) durch das Gebilde des Verdampfers (20) hindurch und aus der Geschirrspülmaschine heraus zu fördern, insbesondere in einen von der Vorderseite (V) der Geschirrspülmaschine (1) diametral abgewandten Bereich (28) hinter und/oder in einen Bereich neben der Geschirrspülmaschine (1) zu fördern.

6. Geschirrspülmaschine (1) nach zumindest einem der Ansprüche 1 bis 5,
**dadurch gekennzeichnet,**
**dass** die Luftfördereinrichtung (26) ein um eine in Betriebsstellung der Geschirrspülmaschine (1) horizontale oder zumindest nahezu horizontale Achse rotierbares Förderrad (30) umfasst.

7. Geschirrspülmaschine (1) nach zumindest einem der Ansprüche 1 bis 6,
**dadurch gekennzeichnet,**
**dass** die Luftfördereinrichtung (26) geeignet ist, Luft (32) gegen eine in Betriebsstellung der Geschirrspülmaschine (1) hinter und/oder neben der Geschirrspülmaschine (1) befindliche Gebäudewand (27) und/oder Küchenmöbelwand zu fördern.

8. Geschirrspülmaschine (1) nach mindestens einem der Ansprüche 1 bis 7,
**dadurch gekennzeichnet,**
**dass** die eingeschaltete Betriebszeit bzw. Nachlaufzeitdauer (NZ1, NZ2) der Luftfördereinrichtung (26) im Nachlaufbetrieb bei zumindest 10 Minuten, insbesondere zwischen 20 Minuten und 60 Minuten, liegt.

9. Geschirrspülmaschine (1) nach mindestens einem der Ansprüche 1 bis 8,
**dadurch gekennzeichnet,**
**dass** der Nachlaufbetrieb der Luftfördereinrichtung (26) maximal bis zum Ende der Trocknungsphase (TP) des jeweilig durchzuführenden Geschirrspülprogramms (GP) geht.

10. Geschirrspülmaschine (1) nach mindestens einem der Ansprüche 1 bis 9,
**dadurch gekennzeichnet,**
**dass** die Förderleistung der Luftfördereinrichtung (26) im Nachlaufbetrieb gegenüber der Förderleistung der Luftfördereinrichtung (26) bei eingeschalteter Wärmepumpe (14) absenkbar ist.

11. Geschirrspülmaschine (1) nach mindestens einem der Ansprüche 1 bis 10,
**dadurch gekennzeichnet,**
**dass** die Nachlaufzeitdauer (NZ1, NZ2) und/oder der zeitliche Abstand (P1, P2) bis zum Einschalten der Luftfördereinrichtung (26) für den Nachlaufbetrieb abhängig ist von einer Umgebungstemperatur am Aufstellort der Geschirrspülmaschine (1).

12. Geschirrspülmaschine (1) nach mindestens einem der Ansprüche 1 bis 11,
**dadurch gekennzeichnet,**
**dass** die Nachlaufzeitdauer (NZ1, NZ2) der Luftfördereinrichtung (26) und/oder der zeitliche Abstand (P1, P2) bis zum Einschalten der Luftfördereinrichtung (26) für den Nachlaufbetrieb abhängig ist von einer am Verdampfer (20) oder in dessen Nahbereich gemessenen Temperatur.

13. Geschirrspülmaschine (1) nach mindestens einem der Ansprüche 1 bis 12,
**dadurch gekennzeichnet,**
**dass** die Nachlaufzeitdauer (NZ1, NZ2) der Luftfördereinrichtung (26) und/oder der zeitliche Abstand (P1, P2) bis zum Einschalten der Luftfördereinrichtung (26) für den Nachlaufbetrieb derart bemessen ist, dass eine hinter und/oder neben der Geschirrspülmaschine (1) befindliche Gebäudewand (27) und/oder Küchenmöbelwand an ihrer Oberfläche, die von der die Struktur des Verdampfers (20) durchströmenden Luft (32) nach deren Herausströmen aus der Geschirrspülmaschine (1) direkt oder indirekt beströmbar ist, insbesondere die auf Höhe des Verdampfers (20) in dessen nächstgelegenem Bereich liegt, bis zu einer Temperatur oberhalb des Taupunkts für Wasser aufwärmbar oder aufgewärmt ist.

14. Geschirrspülmaschine (1) nach einem der Ansprüche 3 bis 13,
**dadurch gekennzeichnet,**
**dass** in der Zeit (P1, P2) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), des jeweilig durchzuführenden Geschirrspülprogramms (GP), bis zum Einschalten der Luftfördereinrichtung (26) für den Nachlaufbetrieb eine hinter und/oder neben der Geschirrspülmaschine (1) befindliche Gebäudewand (27) und/oder Küchenmöbelwand durch Abwärme der Geschirrspülmaschine (1) aufwärmbar ist.

15. Verfahren zum Betreiben einer Geschirrspülmaschine (1) mit zumindest einer Wärmepumpe (14), die zumindest einen Kompressor (16), einen Verflüssiger (18), ein Expansionsorgan (19) und einen Verdampfer (20) umfasst, die untereinander über Leitungsbereiche (21) zur Weiterleitung eines im Betrieb den Aggregatzustand wechselnden Arbeitsmediums (17) verbunden sind, wobei der Wärmepumpe (14) zumindest eine Zuleitung (22) und eine Ableitung (23) von in der Geschirrspülmaschine (1) zirkulierbarer Spülflüssigkeit (24) zugeordnet sind, und wobei zumindest eine Luftfördereinrichtung (26) vorgesehen ist, insbesondere nach mindestens einem der vorhergehenden Ansprüche,
**dadurch gekennzeichnet,**
**dass** die Luftfördereinrichtung (26) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), zumindest eines durchzuführenden Geschirrspülprogramms (GP), während der in ein oder mehreren Teilspülphasen (RP, KP) die zum Reinigen von Geschirr, Gläsern oder ähnlichem Spülgut jeweilig verwendete Spülflüssigkeit (24) in zumindest einer Aufheizphase (AHR, AHK) mittels der Wärmepumpe (14) erwärmt wird, für eine Nachlaufzeitdauer (NZ1, NZ2) betrieben wird.

16. Verfahren nach Anspruch 15,
**dadurch gekennzeichnet,**
**dass** die Luftfördereinrichtung (26) dem Verdampfer (20) der Wärmepumpe (14) zugeordnet ist, und dass diese Luftfördereinrichtung (26) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), des jeweilig durchzuführenden Geschirrspülprogramms (GP), für eine Nachlaufzeitdauer (NZ1, NZ2), insbesondere während der Trocknungsphase (TP) des jeweilig durchzuführenden Geschirrspülprogramms (GP), weiterläuft.

17. Verfahren) nach Anspruch 15,
**dadurch gekennzeichnet,**
**dass** die Luftfördereinrichtung (26) dem Verdampfer (20) der Wärmepumpe (14) zugeordnet ist, und dass diese Luftfördereinrichtung (26) nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), des jeweilig durchzuführenden Geschirrspülprogramms (GP) mit zeitlichem Abstand (P1, P2) zu diesem Ende (tKA), insbesondere in der Trocknungsphase (TP) des Geschirrspülprogramms (GP), automatisiert eingeschaltet und für eine Nachlaufzeitdauer (NZ1, NZ2), insbesondere bis zum Ende (tTA) der Trocknungsphase (TP) des Geschirrspülprogramms (GP), betrieben wird.

18. Verfahren nach Anspruch 17,
**dadurch gekennzeichnet,**
**dass** die Luftfördereinrichtung (26) mit einem zeitlichen Abstand (P1) von zumindest 3 Minuten nach dem Ende (tKA) der letzten mittels der Wärmepumpe (14) durchgeführten Aufheizphase (AHK) für Spülflüssigkeit (24), insbesondere nach dem Ende (tKA) der Klarspülphase (KP), des jeweilig durchzuführenden Geschirrspülprogramms (GP) eingeschaltet wird.

19. Verfahren nach mindestens einem der Ansprüche 15 bis 18,
**dadurch gekennzeichnet,**
**dass** die Nachlaufzeitdauer (NZ1, NZ2) der Luftfördereinrichtung (26) und/oder der zeitliche Abstand (P1, P2) bis zum Einschalten der Luftfördereinrichtung (26) abhängig von einer gemessenen Temperatur der Umgebungsluft am Aufstellort oder Einbauort der Geschirrspülmaschine (1) und/oder von einer am Verdampfer (20) gemessenen Temperatur ist.

20. Verfahren nach einem der Ansprüche 15 bis 19,
**dadurch gekennzeichnet,**
**dass** die Nachlaufzeitdauer (NZ1, NZ2) der Luftfördereinrichtung (26) und/oder der zeitliche Abstand (P1, P2) bis zum Einschalten der Luftfördereinrichtung (26) abhängig von einer nach dem Ende der Spülphase (SP) im Nahbereich einer Gebäudewand (27) und/oder Küchenmöbelwand gemessenen Temperatur ist, welche an die Luftauslassöffnung (LA) der Geschirrspülmaschine (1) grenzt, aus der die die Struktur des Verdampfers (20) während des Wärmepumpenbetriebs durchströmende Luft (32) ausströmt.

21. Verfahren nach einem der Ansprüche 15 bis 20,
**dadurch gekennzeichnet,**
**dass** die Nachlaufzeitdauer (NZ1, NZ2) der Luftfördereinrichtung (26) und/oder der zeitliche Abstand (P1, P2) bis zum Einschalten der Luftfördereinrichtung (26) für den Nachlaufbetrieb derart eingestellt wird, dass eine hinter und/oder neben der Geschirrspülmaschine (1) befindliche Gebäudewand (27) und/oder Küchenmöbelwand an ihrer Oberfläche, die von der die Struktur des Verdampfers (20) während des Wärmepumpenbetriebs durchströmenden Luft (32) nach dem Herausströmen aus der Geschirrspülmaschine (1) direkt oder indirekt beströmt wird, insbesondere die auf Höhe des Verdampfers (20) in dessen nächstgelegenem Bereich liegt, bis zu einer Temperatur oberhalb des Taupunkts für Wasser aufgewärmt wird.
